# EUROPEAN PATENT APPLICATION

(11) **EP 2 390 055 A1**
(43) Date of publication of application: **30.11.2011**
(21) Application number: 09833500.3
(22) Date of filing: 18.12.2009
(51) Int. Cl.: B24D 11/00, B24D 3/00, B24D 3/06

(54) **SAW WIRE AND METHOD OF MANUFACTURING SAW WIRE**

(30) Priority: 18.12.2008 JP 2008322370; 18.12.2008 JP 2008322369; 04.09.2009 JP 2009205363
(71) Applicant: Nippon Steel Materials Co., Ltd., Tokyo 101-0021 (JP)
(72) Inventor: MORITA, Mitsuru, Tokyo 100-8071 (JP); SAKAMOTO, Hiroaki, Tokyo 100-8071 (JP); TANAKA, Masamoto, Tokyo 100-8071 (JP); TATSUMI, Kohei, Tokyo 100-8071 (JP)
(74) Representative: Vossius & Partner
(86) International application number: PCT/JP2009/071129
(87) International publication number: WO 2010/071198

(57) **Abstract**

There are provided a fixed-abrasive grain saw wire with a superior cutting performance and a manufacturing method thereof. Particularly, there are provided a fixed-abrasive grain saw wire with abrasive grains adhered to a metal wire via a Zn-based or Sn-based low-melting-point metal and a high-melting-point metal having a melting point higher than that of the low-melting-point metal, and a manufacturing method thereof.

## Description

### TECHNICAL FIELD

The present invention relates to a saw wire and a manufacturing method thereof, particularly to a fixed-abrasive grain saw wire and a manufacturing method thereof.

### BACKGROUND ART

As a method of slicing a semiconductor ingot such as silicon, SiC or the like, there has been used ID blade cutting capable of performing slicing with a high efficiency and precision. According to such ID blade cutting, there has been an attempt to enlarge the diameter of an ID blade to match an enlarged silicon ingot, and an attempt to thin the ID blade to reduce a cutting loss. However, the ID blade cannot be thinned any further when the diameter of the silicon ingot is greater than 12 inch (300mm). In this sense, there has been a limitation on a reduction of a cutting loss of an expensive work material.

Here, as an alternative to the ID blade cutting method for cutting a semiconductor ingot, there has been performed a wire cutting method employing loose abrasive grains of WA (white alumina), GC (green silicon carbide) or the like mixed in an oil. Further, in order to slice a single-crystal ingot such as sapphire, SiC or the like, there has been performed a cutting method employing loose abrasive grains of WA (white alumina), GC (green silicon carbide), diamond or the like mixed in an oil However, this type of cutting method has exhibited not only a low cutting speed, but also an unsatisfactory precision. Further, when performing this type of cutting method, a work material may be smeared with an oil, thus leading to environmental pollution.

On the other hand, there has been performed a cutting method employing a fixed-abrasive grain saw wire. According to this method, a saw wire with super abrasive grains adhered to a steel wire or the like is stretched across guiding rolls, and an appropriate amount of load is applied to a semiconductor ingot or the like serving as a work material. In this way, the work material is allowed to be in contact with the saw wire, thereby allowing a work material with a large diameter to be cut by a thin saw wire and reducing a cutting loss thereof. Further, a water-based grinding fluid can be used when performing this wire cutting method.

As conventional methods for manufacturing a diamond saw wire employing diamond abrasive grains as super grains, there have been proposed a method in which coarse diamond abrasive grains are first adhered via Ni electrodeposition, and fine diamond abrasive grains are adhered later also via Ni electrodeposition (Patent document 1: Japanese Examined Patent Application Publication No.Hei 4-4105), and a method in which a wire is helically wound for several times as well as held by a wire suspender, and Ni plating is statically performed by inserting such wire into a abrasive grain tank (Patent document 2: Japanese Unexamined Patent Application Publication No. Hei 7-227766). As for fixed-abrasive grain saw wires obtained without performing Ni electrodeposition, there have been known a fixed-resin saw wire employing a resin (Patent document 3: Japanese Unexamined Patent Application Publication No.2006-7387), and a saw wire with abrasive grains adhered thereto via a brazing material and a solder (Patent document 4: Japanese Patent No.4008660).

However, a sufficient cutting performance cannot be achieved with the fixed-resin saw wire, since the resin has an insufficient adhesion force for adhering the diamond abrasive grains. Further, with regard to the Ni electrodeposited saw wire, there needs to be secured on a diamond abrasive grain bed abrasive grains of an amount far larger than an amount of the abrasive grains actually adhered to a wire, and an electrodeposition speed is slow. Therefore, there must be held a large amount of expensive diamond abrasive grains for a long time. Thus, despite a relatively high cutting performance thereof, the Ni electrodeposited saw wire has to be manufactured at a high cost.

In contrast to those manufacturing methods, Patent document 4 discloses a manufacturing method using a brazing material and a solder, such manufacturing method being relatively low-cost and capable of forming a saw wire with a relatively high cutting performance. An example 3 and example 4 of the Patent document 4 disclose a manufacturing method and an evaluation of a diamond-coated wire obtained by allowing Cu-plated diamond abrasive grains to be adhered to the Inconel 718 wire using an Sn-Ag-Cu-based solder.

### PRIOR ART LITERATURES

### Patent Literatures

Patent document 1: Japanese Examined Patent Application Publication No.Hei 4-4105
Patent document 2: Patent document 2: Japanese Unexamined Patent Application Publication No. Hei 7-227766
Patent document 3: Patent document 3: Japanese Unexamined Patent Application Publication No.2006-7387
Patent document 4: Patent document 4: Japanese Patent No.4008660

### DISCLOSURE OF THE INVENTION

### Problem to be solved by the Invention

However, a sufficient holding force for holding the abrasive grains cannot be achieved event with the saw wire disclosed in Patent document 4, thereby making it difficult to improve the cutting performance of the corresponding saw wire.

In view of the aforementioned problems, it is an object of the present invention to provide a saw wire with a superior cutting performance, with abrasive grains adhered to a metal wire and with fewer abrasive grains dropping off, and a manufacturing method thereof.

### Mean for Solving the Problem

The invention according to an aspect 1 is a fixed-abrasive grain saw wire with abrasive grains adhered to a metal wire through an adhesion portion, in which the adhesion portion includes a Zn-based or Sn-based low-melting-point metal and a high-melting-point metal with a melting point higher than that of the low-melting-point metal.

The invention according to an aspect 2 is the one set forth in the aspect 1, in which the high-melting-point metal is contained in a high-melting-point metal layer formed on at least one of areas including peripheries of the abrasive grains, a surface of the saw wire and a surface of the metal wire.

The invention according to an aspect 3 is the one set forth in the aspect 1, in which the abrasive grains are coated with a Ni coating layer, the low-melting-point metal is an Sn-based solder containing 0.5 to 5.0% by mass of Ag, and the high-melting-point metal is an intermetallic compound containing Sn.

The invention according to an aspect 4 is the one set forth in the aspect 3, in which the Sn-based solder containing 0.5 to 5.0% by mass of Ag has a structure in which there are dispersed Ag₃Sn-based intermetallic compounds that are at least one of a plate type having a thickness of 1 to 2µm and a cord type having a diameter of 1 to 2µm.

The invention according to an aspect 5 is the one set forth in the aspect 3 or the aspect 4, in which the Sn-based solder containing 0.5 to 5.0% by mass of Ag further contains 0.01 to 0.5% by mass of Fe and 0.01 to 0.5% by mass of Ni.

The invention according to an aspect 6 is the one set forth in the aspect 3, in which the abrasive grains comprise a multi-layered coating layer having a lower layer of Ti or Cr and an upper layer of Ni.

The invention according to an aspect 7 is the one set forth in the aspect 3 or the aspect 6, in which the intermetallic compound containing Sn exists at least around the abrasive grains.

The invention according to an aspect 8 is the one set forth in the aspect 2 or the aspect 6, in which an intermetallic compound containing Sn and Ni exists as an intermetallic compound layer around the abrasive grains.

The invention according to an aspect 9 is the one set forth in the aspect 2 or the aspect 6, in which an intermetallic compound containing Sn and Ni includes one or more than one of Ni₃SN₄, Ni₃SN₂ and Sn_{(1-x-y)}NiₓCu_{y} (here, 0.1 ≤ x ≤0.7, x ≤0.7, 0.01 ≤ y ≤ 0.5)

The invention according to an aspect 10 is the one set forth in the aspect 1, in which the low-melting-point metal is a solder containing Sn and Zn, and the high-melting-point metal is an intermetallic compound containing Sn or Zn.

The invention according to an aspect 11 is the one set forth in the aspect 10, in which the solder has a Zn content of 1 to 35% by mass.

The invention according to an aspect 12 is the one set forth in the aspect 11, in which the solder has a composition represented by Sn-Zn-X in which X includes one or more than one of Bi, Ni, Cu, Fe, Sb, Pb, In and Ag, and a content of X is 0.5 to 5% by mass.

The invention according to an aspect 13 is the one set forth in the aspect 10, in which the abrasive grains are coated with a Ni or Cu coating layer.

The invention according to an aspect 14 is the one set forth in the aspect 10 or the aspect 13, in which the abrasive grains comprise a multi-layered coating layer having a lower layer of Ti or Cr and an upper layer of Ni or Cu.

The invention according to an aspect 15 is the one set forth in the aspect 10 or the aspect 13, in which the intermetallic compound containing Sn or Zn exists at least around the abrasive grains.

The invention according to an aspect 16 is the one set forth in the aspect 10 or the aspect 13, in which the intermetallic compound containing Sn or Zn includes one or more than one of a Ni-Sn-based, a Ni-Zn-based, a Ni-Sn-Zn-based, a Cu-Sn-based, a Cu-Sn-Zn-based and a Cu-Zn-based intermetallic compounds.

The invention according to an aspect 17 is the one set forth in the aspect 1, in which the adhesion portion includes a high-melting-point metal layer composed of the high-melting-point metal with a melting point of 700°C or higher; and a low-melting-point metal layer composed of the low-melting-point metal.

The invention according to an aspect 18 is the one set forth in the aspect 17, in which the high-melting-point metal layer is formed on an outside of the low-melting-point metal layer.

The invention according to an aspect 19 is the one set forth in the aspect 17 or the aspect 18, in which the high-melting-point metal composing the high-melting-point metal layer and the low-melting-point metal composing the low-melting-point metal layer are diffused with one another, thereby forming in the low-melting-point metal layer an alloy phase of the low-melting-point metal and the high-melting-point metal.

The invention according to an aspect 20 is the one set forth in the aspect 17 and the aspect 18, in which the high-melting-point metal composing the high-melting-point metal layer is Ni or a Ni alloy, or Cu or a Cu alloy.

The invention according to an aspect 21 is the one set forth in the aspect 17, in which the abrasive grains have a Ni coating layer.

The invention according to an aspect 22 is the one set forth in the aspect 17 or the aspect 18, in which the low-melting-point metal layer is formed through hot-dip plating.

The invention according to an aspect 23 is the one set forth in the aspect 17 or the aspect 18, in which the low-melting-point metal composing the low-melting-point metal layer is a Zn-Al alloy.

The invention according to an aspect 24 is the one set forth in any one of the aspect 1, the aspect 2, the aspect 3, the aspect 10 and the aspect 17, in which the abrasive grains are diamond abrasive grains.

The invention according to an aspect 25 is the one set forth in any one of the aspect 1, the aspect 2, the aspect 3, the aspect 10 and the aspect 17, in which the metal wire is a steel wire.

The invention according to an aspect 26 is the one set forth in the aspect 25, in which the surface of the metal wire is coated with a plating layer of Zn, brass or Cu.

The invention according to an aspect 27 is a manufacturing method of saw wire for manufacturing a fixed-abrasive grain saw wire with a plurality of abrasive grains adhered to a metal wire, comprising: mixing the abrasive grains into a molten metal bath prepared by melting a low-melting-point metal: and dipping the metal wire into the molten metal bath, followed by continuously pulling up the metal wire in a substantially vertical direction, thereby allowing the abrasive grains to be adhered to the metal wire.

The invention according to an aspect 28 is the one set forth in the aspect 27, in which the metal wire is continuously pulled up while the molten metal bath is being stirred or oscillated.

The invention according to an aspect 29 is the one set forth in the aspect 27 or the aspect 28, in which the low-melting-point metal is Sn or an Sn alloy, or Zn or a Zn alloy.

The invention according to an aspect 30 is the one set forth in the aspect 27, in which the metal wire is coated with a high-melting-point metal layer.

### Effects of the invention

According to a saw wire of the present invention, a Zn-based or Sn-based low-melting-point metal and a high-melting-point metal with a melting point higher than that of the low-melting-point metal are employed to allow abrasive grains to be adhered to the wire, thereby easily and inexpensively improving a holding force for holding the abrasive grains, and thus obtaining a saw wire with a superior cutting performance. The saw wire of the present invention is particularly suitable for use in precision machining of a semiconductor or the like, thus resulting in a significant industrial effect.

Further, according to the saw wire of the present invention, a Sn-based solder containing Ag of 0.5 to 5.0mass% and an intermetallic compound containing Sn are employed to allow abrasive grains having a Ni coating layer to be adhered to the wire, thereby easily and inexpensively improving the holding force for holding the abrasive grains, and thus obtaining a saw wire with a superior cutting performance. The saw wire of the present invention is particularly suitable for use in precision machining of a semiconductor or the like, thus resulting in a significant industrial effect.

Furthermore, according to the saw wire of the present invention, an Sn-Zn-based solder and an intermetallic compound containing Sn or Zn are employed to allow the abrasive grains to be adhered to the wire, thereby easily and inexpensively improving the holding force for holding the abrasive grains, and thus obtaining a saw wire with a superior cutting performance. The saw wire of the present invention is particularly suitable for use in precision machining of a semiconductor or the like, thus resulting in a significant industrial effect.

Furthermore, according to the saw wire of the present invention, a low-melting-point metal layer accompanied by a high-melting-point metal layer is employed to allow the abrasive grains to be adhered to a metal wire, thereby improving the holding force for holding the abrasive grains, and thus obtaining a saw wire with a superior cutting performance. The saw wire of the present invention is particularly suitable for use in precision machining of a semiconductor or the like, thus resulting in a significant industrial effect.

### Brief description of the drawings

FIG.1 is a cross sectional view schematically showing an example of a saw wire of the present invention.
FIG.2 is a schematic diagram showing a framework of a coating apparatus.
FIG.3 is a schematic diagram showing a framework of a coating apparatus of another example.
FIG.4 is a schematic diagram showing a structure around diamond abrasive grains manufactured in Example 1.
FIG.5 is a schematic diagram showing a composition around diamond abrasive grains manufactured in Example 5.

### BEST MODE FOR CARRYING OUT THE INVENTION

A saw wire superior in cutting performance is obtained by allowing abrasive grains to be firmly adhered to a metal wire with a high strength. Abrasive grains can be firmly adhered to a thin metal wire only when an adhesion force between the metal wire and a low-melting-point metal (referred to as "solder," hereafter), the strength of the solder, and an adhesion force between the solder and the abrasive grains are high. The reason that a low-melting-point metal is employed for adhesion is because the abrasive grains can be adhered to the steel wire by melting such low-melting-point metal.

Here, the reason that a brazing material with a high melting point is not appropriate for use is because a steel wire strengthened through a treatment, such as a steel cord, may be softened at the time of brazing. Further, when performing electrolytic plating with a high-melting-point brazing material such as a Ni alloy, the plating has to have a thickness of at least 10µm to allow abrasive grains with a grain diameter of tens of µm to be adhered to a steel wire, thereby requiring a long period of time, thus incurring a high cost to accomplish the step of plating.

With regard to the aforementioned saw wire obtained by allowing abrasive grains to be adhered to a steel wire with an adhesion portion using a low-melting-point metal, the inventors of the present invention found that the object of the present invention can be achieved with a saw wire with abrasive grains firmly adhered thereto and superior in cutting performance and durability (longer lasting), such saw wire being manufactured by allowing the abrasive grains to be adhered to the metal wire under a condition in which the aforementioned adhesion portion contains a Zn-based or Sn-based low-melting-point metal and a high-melting-point metal with a melting point higher than that of aforementioned low-melting-point metal. The presence of the aforementioned high-melting-point metal serves to strengthen the adhesion forces of the abrasive grains at the time of cutting (to restrain the detachments of the abrasive grains at the time of cutting).

The adhesion forces of the abrasive grains at the time of cutting can be further strengthened due to the reasons described later, when the aforementioned high-melting-point metal exists as a high-melting-point metal layer in one or more locations among a periphery of the aforementioned abrasive grain, the surface of the aforementioned saw wire and the surface of the aforementioned metal wire.

Further, more preferable is a saw wire in which the abrasive grains comprise a coating layer of Ni, the aforementioned low-melting-point metal is a Sn-based solder containing 0.5 to 5.0% by mass of Ag, and the aforementioned high-melting-point metal is an intermetallic compound containing Sn, because it provides a superior cutting performance, allowing abrasive grains to be further firmly adhered thereto at the time of cutting.

Also, more preferable is a saw wire in which the aforementioned low-melting-point metal is a solder containing Sn and Zn, and the aforementioned high-melting-point metal is an intermetallic compound containing either Sn or Zn, because it also provides a superior cutting performance, allowing abrasive grains to be further firmly adhered thereto at the time of cutting.

Also, it is more preferable that the saw wire is a fixed-abrasive grain saw wire with a plurality of abrasive grains adhered to a metal wire, in which the abrasive grains are adhered to the aforementioned metal wire by means of a high-melting-point metal layer with a melting point of 700°C or higher and a Zn-based or Sn-based low-melting-point metal layer, because it also provides a superior cutting performance, allowing abrasive grains to be further firmly adhered thereto at the time of cutting.

In the beginning, a solder is described.

The solders used in the present invention are a Zn-based or Sn-based low-melting-point metal. The solders also include a Sn-Zn-based low-melting-point metal containing Sn and Zn.

When the aforementioned abrasive grains comprise a Ni coating layer, and the aforementioned low-melting-point metal is a Sn-based solder containing 0.5 to 5.0% by mass of Ag, and the aforementioned high-melting-point metal is an intermetallic compound containing Sn, it is further preferred that the following types of the solders are employed.

Particularly, there is preferred a solder with a high strength and in which intermetallic compounds are finely dispersed. A Sn-Ag-based solder allows various kinds of intermetallic compounds to be formed depending on the kinds and amounts of additives. Typical kinds of the intermetallic compound include Ni-Sn-based, Sn-Cu-based and Sn-Ag-based. The Sn-Ag-based solder is commonly used as a lead-free solder, and allows various kinds of intermetallic compounds to be formed depending on the kinds and amounts of the additives. The additives include As, Ba, Co, Cd, Fe, Ni, Pt and the like, and allow various kinds of intermetallic compounds to be formed. Further, the shapes of the intermetallic compounds include islands, grains, plates, needles, cords and blocks. Furthermore, the volume fraction of the intermetallic compounds finely dispersed in the aforementioned solders is preferably 1volume% to 10volume%.

The additive amount of Ag in the Sn-based solder is preferably 0.5 to 5.0% by mass. When this additive amount of Ag is less than 0.5% by mass, a sufficient wettability may not be achieved with respect to either the wire or the abrasive grains, thereby leading to the failure to allow the abrasive grains to be adhered to the wire firmly enough in some cases. Further, when the additive amount of Ag is greater than 5.0% by mass, although a sufficient wettability can be achieved, the solder itself is caused to become brittle, thereby leading to the failure to allow the abrasive grains to be adhered to the wire firmly enough in some cases.

Further, it is particularly preferable that the solder is strengthened through a structure in which Sn-Ag-based intermetallic compounds (Ag₃Sn) of a plate type having a thickness of about 1 to 2µm or a cord type having a diameter of about 1 to 2µm, are dispersed or connected to one another to form a network. When the additive amount of Ag is less than 0.5% by mass, there may not be formed a sufficient amount of Ag₃Sn required for maintaining the strength of the solder in some cases. Further, when the additive amount of Ag is greater 5.0% by mass, a significant deviation from an eutectic composition (Sn:Ag = 96.5:3.5) occurs, thereby causing Ag₃Sn to be coarsened, thus unfavorably not only decreasing the strength of the solder but also raising the melting point thereof in some cases. Furthermore, it may be also undesirable from the perspective of economics to use expensive Ag more than necessary. It is further preferred that the additive amount of Ag is 1.0 to 4.5% by mass so that substantially no coarsened intermetallic compound having a block shape is formed, thereby making it possible to maintain a further high strength of the solder.

Even when adding elements other than Sn, Ag, various kinds of intermetallic compounds can be formed in the solder by appropriately setting the kinds and amounts of the elements added.

As mentioned earlier, additives in the Sn-based solder containing 0.5 to 5.0% by mass of Ag include As, Ba, Co, Cd, Fe, Ni, Pt and the like. Among them, the strength of the solder can be increased by adding 0.01 to 0.5% by mass of Fe and 0.01 to 0.5% by mass of Ni thereto. Both Fe and Ni are slightly dissolved in Sn. The Fe and Ni thus dissolved serve to increase the strength of the solder. Intermetallic compounds such as FeSn₂, Ni₃Sn₄ and the like are precipitated when there is added a relatively large amount of Fe or Ni. When there is added a relatively small amount of Fe or Ni, the aforementioned intermetallic compounds are finely precipitated and contribute to increasing the strength of the solder. However, when there is added an excessive amount of Fe or Ni, the aforementioned precipitated intermetallic compounds are agglomerated as well as coarsened, thereby unfavorably causing the breakage of the solder to begin therewith, thus decreasing the strength thereof.

Fe is preferably added to the Sn-based solder containing 0.5 to 5.0% by mass of Ag, by 0.01 to 0.5% by mass. When the additive amount of Fe is less than 0.01% by mass, there may not be achieved a strength improvement effect caused by solute strengthening. Further, when the additive amount of Fe is greater than 0.5% by mass, the strength of the solder may be unfavorably decreased due to the agglomerated as well as coarsened intermetallic compounds. It is preferred that the additive amount of Ni is also 0.01 to 0.5% by mass.

When the aforementioned low-melting-point metal is a solder containing Sn and Zn, and the aforementioned high-melting point metal is an intermetallic compound containing Sn or Zn, it is further preferred that the following types of the solders are employed.

Specifically, there is preferred a solder with a high strength. Particularly, it is preferred that the solder is strengthened through a structure in which there are dispersed, in tin (Sn), Zn of a plate type having a thickness of about 1 to 2µm or a needle type having a diameter of about 1 to 2µm. Such kinds of Zn have high mechanical strengths. Therefore, a solder with such kinds of Zn dispersed in Sn can be a composite material and has a superior strength as well as toughness, thereby achieving a high capability of holding the abrasive grains, and thus making it hard for the abrasive grains to drop off. In this sense, a saw wire obtained by allowing the abrasive grains to be adhered thereto using the Sn-Zn-based solder shows a high cutting performance.

Zn in a solidified Sn-based solder is rarely further dissolved in Sn, but precipitated as Zn of the plate type or the needle type having the diameter of about 1 to 2µm. The additive amount of Zn is preferably 1% by mass or more in order to allow the Zn of the plate type or the needle to be reliably precipitated in the Sn-based solder.
Further, the amount of the Zn of the plate type or the needle type and the strength of the solder are increased when the additive amount of Zn is increased. Furthermore, in a case in which the additive amount of Zn is increased beyond an eutectic point (Sn: 91.2% by mass, Zn: 8.8% by mass, 198.5°C), the solder starts to be solidified at a temperature of about 320°C when the additive amount of Zn is about 35% by mass, thereby making Zn susceptible to oxidation, and thus allowing an upper limit of Zn to be favorably set to 35% by mass. Here, the additive amount of Zn may slightly vary depending on the kind of a third element added. Specifically, the additive amount of Zn may deviate from the aforementioned eutectic point by plus or minus 4% by mass approximately, namely, a range from "Sn: 96% by mass, Zn: 4% by mass" to "Sn: 88% by mass, Zn: 12% by mass." In this way, there is realized a low-temperature treatment which is preferred from the perspective of strength improvement due to refinement of Zn and the perspective of strength disimprovement in a wire base material.

Since Zn contained in a Sn-Zn-based solder is susceptible to oxidation, an oxidized film may be easily formed on the surface of the Sn-Zn-based solder. In this sense, the Sn-Zn-based solder tends to be inferior to other solder materials such as the Sn-Pb-based, the Sn-Ag-based and the Sn-Bi-based, in terms of wettability. As the third element(s) added to the Sn-Zn-based solder, there can be employed Ba, B, Cd, Ni, Cu, Fe, Sb, Pb, In, Ag, Mo, Co or the like. Particularly, in order to improve the wettability of the Sn-Zn-based solder, any one element selected from a group of Bi, Ni, Cu, Fe, Sb, Pb, In, Ag or a combination thereof has to be added by 0.5% by mass to 5% by mass. A sufficient effect may not be achieved if the additive amount of the third element(s) is/are less than 0.5% by mass. However, when the additive amount of the third element(s) is/are greater than 5% by mass, there may be unfavorably formed coarsened intermetallic compounds of the added element(s) with Sn or Zn. Further, the volume fraction of the intermetallic compounds dispersed in the aforementioned Sn-Zn-based solder is preferably 1% by volume to 15% by volume.

Next, abrasive grains are described.

As the materials of the abrasive grains, there can be employed alumina Al₂O₃, SiC, SiO₂, diamond and so on. Among them, diamond is most superior in terms of hardness and heat conduction. In order to improve the adhesion force between the solder and the abrasive grains, it is preferred, also from the perspective of improving the wettability of the solder, that the abrasive grains are coated in advance with Ni or Cu via plating or the like. Particularly, when using diamond abrasive grains, the diamond abrasive grains are simply physically (or mechanically) covered by the Ni or Cu plating layer, thereby resulting in no chemical binding between the Ni or Cu atoms and the diamond.

A Ti (titanium) or Cr (chrome) film is preferred as a metallic film capable of chemically binding with the diamond. However, since both titanium and chrome contribute to disimproving the wettability of the solder, it is further preferred that the surface of the diamond is first coated with titanium or chrome, followed by allowing the surface thus coated to be further coated with Ni or Cu, thereby obtaining the multi-layer-coated abrasive grain. Since titanium and chrome are chemically bound with nickel and copper, the binding strength between the diamond and the metal coating layer is improved. Further, instead of employing a so-called single crystal diamond having a crystal habit surface with organized symmetry, a crushed diamond is preferred from the perspective of increasing an area of adhesion with respect to the wire.

Next, binding between the abrasive grains and the solder is described.

As mentioned earlier, a saw wire with abrasive grains adhered to a wire is obtained by using a solder superior in mechanical strength to allow metal plated abrasive grains to be adhered to the wire. In this case, binding on the interface between the solder and the metal plating is important. Particularly, formations of chemical bindings are required to effect a firm binding on the aforementioned interface.

Intermetallic compounds formed on the interface between the metal plated abrasive grains and the solder, indicate that the metal plating and the solder are chemically bound with one another. More specifically, the intermetallic compounds have to be on the interface between the solder and the metal plating. However, since intermetallic compounds are fragile in general, a thick intermetallic compound layer is susceptible to breakage, thus disimproving a holding force for holding the abrasive grains. In this sense, it is preferred that there is formed a thinner and more uniform intermetallic compound layer on the interface between the metal plated abrasive grains and the solder.
From this perspective, it is crucial that there is employed an appropriate combination of the metal plated abrasive grains and the solder used for adhesion thereof, so that a thin intermetallic compound layer can be formed. Particularly, the combination of the Ni platted abrasive grains and the Sn-Zn-based solder is an appropriate combination.

With regard to a combination of the Cu plated abrasive grains and the Sn-Ag-based solder containing 0.5 to 5.0% by mass of Ag, there are formed 3 to 5µm of ununiform and relatively thick layers of Cu₆Sn₅ and Cu₃Sn on the interface therebetween, thus unfavorably being susceptible to breakage. In contrast, a combination of the Ni plated abrasive grains and the Sn-Ag-based solder is an appropriate combination, since it allows a relatively thin and uniform intermetallic compound layer to be formed.

In an interface structure between the abrasive grains and the Sn-based solder containing 0.5 to 5.0% by mass of Ag, it is preferred that there is formed a thin intermetallic compound of Ni₃Sn₄ or Ni₃Sn₂ of 2µm or thinner so that a firm binding can be achieved. Further, when Cu is contained by 1.5% by mass or more, there is obtained an intermetallic compound of Sn_{(1-x-y)}NiₓCu_{y} (here, 0.1≤x≤0.7, 0.0<y≤0.8). In a solder containing Cu of about 0.5% by mass, there is obtained an intermetallic compound of Sn_{(1-x-y)}NiₓCu_{y} (here, 0.1≤x≤0.7, 0.0<y≤0.5) in which Cu is solid-soluted. Here, the intermetallic compounds are unfavorably thickened when "y" denoting the ratio of Cu is greater than 0.5. Further, it is preferred that the thicknesses of the intermetallic compound of Ni₃Sn₄ or Ni₃Sn₂ or Sn_{(1-x-y)}NiₓCu_{y} (here, 0.1≤x≤0.7, 0.0<y≤0.5) are 1µm or thinner.

Furthermore, in an interface structure between the Sn-Zn-based solder and the abrasive grains, there can be obtained various kinds of intermetallic compounds including Sn-Ba-based, Sn-Ni-Zn-based, Sn-Ni-based, Ni-Zn-based, Sn-Mo-based and the like depending on the third element added to the corresponding Sn-Zn-based solder. Particularly, it is preferred that there is a formed an interface structure in which the Ni plated abrasive grains are surrounded by the Sn-Ni-Zn-based, the Sn-Ni-based and the Ni-Zn-based intermetallic compounds that are 2µm or thinner.
It is further preferable that the thickness of the Sn-Ni-Zn-based intermetallic compound is 1µm or thinner. Further, the aforementioned intermetallic compounds do not necessarily have to be stoichiometric compositions.

Next, a wire is described.

Wires with a high strength include a stainless wire (SUS316, SUS304 etc.), an Inconel wire, a steel wire and so on. Although no restriction is imposed on the kind of a wire, a steel wire (a piano wire) or the like having a tensile strength of 3000MPa or larger is preferred even from the perspective of price. With regard to an adhesion force between the wire and the solder, it is preferred that the wire with a high strength is coated in advance with copper (Cu), brass (Cu-Zn alloy) or Zn so that a favorable wettability of the solder is ensured. Further, the thickness of the corresponding plating layer is preferably 1µm or thinner.

Further, when using a steel wire as a wire, Fe contained in such steel wire is slightly melted into the solder at the time of a heating treatment, thus contributing to improving the strength of the solder. From this perspective, it is evident that the abrasive grains coated with the Ni plating layer and the Sn-based solder containing 0.5 to 5.0% by mass of Ag compose the significantly preferable combination used to manufacture the wire with the abrasive grains being adhered to the steel wire by means of the Sn-based solder.

Next, an adhesion force between the wire and the solder is described.

In general, the wire and the plating layer are strengthened during a drawing step, thereby allowing a strong metal binding state to be established therebetween. Further, it is preferred that a thin and uniform intermetallic compound layer is formed on an interface between the plating layer and the Sn-Zn-based solder in a similar fashion as the interface between the abrasive grains and the Sn-Zn-based solder. The thinner the plating layer itself, the thinner the intermetallic compound layer formed on the corresponding interface becomes. In this sense, the thickness of the plating layer is preferably 1µm or thinner.

Next, examples of a manufacturing method are described.

A steel wire or the like with a high tensile strength is preferably employed as a thin wire serving as a base material of a saw wire. Further, it is preferred that the surface of the steel wire is coated with either brass or copper, and that the steel wire thus coated is further coated with a solder in advance from the perspective of the wettability of the solder at the time of performing the abrasive grain adhesion step. There is prepared in advance a mixture in paste form by mixing together the abrasive grains, fine solder balls and a flux.

The wire subjected to the solder coating treatment is then caused to pass through a container containing the aforementioned mixture in paste form, followed by being drawn from a nozzle end having a hole with a given diameter, thereby allowing the mixture in paste form to be further applied on the wire. The wire thus treated with the mixture in paste form is then caused to pass through a heated tube furnace so as to melt the solder, followed by allowing the abrasive grains to be adhered to the wire by cooling as well as solidifying the solder layer outside the furnace. Further, the wire thus obtained is further caused to pass through a cleansing tank so as to remove excessive flux component, followed by winding the wire around a reel, and thus obtaining a saw wire.

The saw wire is a fixed-abrasive grain saw wire with a plurality of abrasive grains adhered to a steel wire. Particularly, the abrasive grains are adhered to the steel wire via a high-melting-point metal layer with a meting point of 700°C or higher and the Zn-based or Sn-based low-melting-point metal layer. Following is a description of such saw wire.

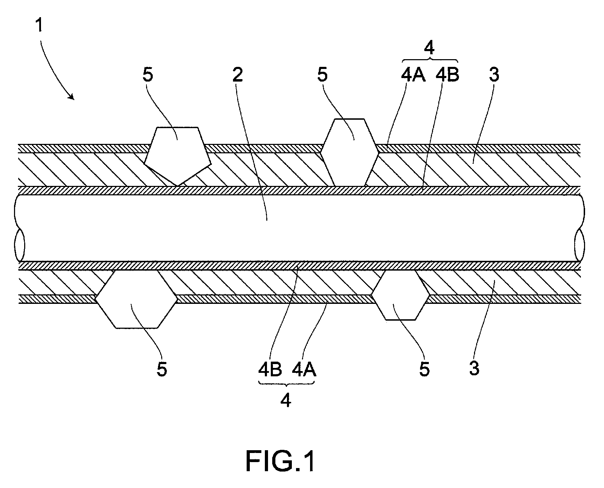

With regard to a saw wire 1 shown in FIG.1, a low-melting-point metal layer 3 and high-melting-point metal layers 4 are formed on a surface of a metal wire 2. Further, abrasive grains 5 are adhered thereto via the corresponding low-melting-point metal layer 3 and high-melting-point metal layers 4.

A low-melting point metal composing the low-melting point metal layer 3 includes, for example, the aforementioned solders. Further, it is preferred that the low-melting point metal composing the low-melting point metal layer 3 has a high strength. Here, alloying for strengthening is effected, for example in a Sn-based or Zn-based low-melting-point metal, by adding Cu, Ni, Ag and the like thereto. However, since alloying with a high concentration thereof leads to a higher melting point and coarsened precipitates, each one of the aforementioned elements is preferably added by 1% or less. Further, a Sn-based or Zn-based metal or alloy is preferably employed as the low-melting-point metal, and the melting point thereof is preferably 550°C or lower.

The saw wire 1 allows an adhesion force thereof to be further strengthened by forming the high-melting-point metal layer 4. As for a high-melting-point metal composing the high-melting-point metal layer 4, there is employed a metal with a melting point of 700°C or higher, preferably, 850°C or higher.

In FIG.1, the high-melting-point metal layer 4 is composed of an outer layer 4A and an inner layer 4B, and the low-melting-point metal layer 3 is provided between the outer layer 4A and the inner layer 4B. However, the present invention is not limited to this structure.

Namely, adhesion of the abrasive grains 5 is preferably fortified by providing at least one high-melting-point metal layer 4 between the metal wire 2 and the low-melting-point metal layer 3 (inner side), on the surface of the low-melting-point metal layer 3 (outer side) or on a mid-section of the low-melting-point metal layer 3. It is also preferred that the high-melting-point metal layer 4 has two or more than two of the outer layer 4A, a middle layer (not shown) and the inner layer 4B. When there is provided the high-melting-point metal layer 4 as the outer layer 4B, a wear resistance of the metal wire 2 can be improved, thus improving a cutting performance thereof. As for the high-melting-point metal, while Ni or a Ni alloy, or Cu or a Cu alloy are the most appropriate, there can also be employed Pd, Cr, Pt, Rh, Ti and the like.

When there is provided the high-melting-point metal layer 4, a Zn-Al alloy can also be appropriately employed as the low-melting-point metal. In this way, there can be formed a diffused layer by allowing Ni, Cu or the like of the high-melting-point metal layer 4 to be diffused into the low-melting-point metal layer 3. Further, an alloy phase of Ni, Cu or the like and Al is thus formed in the corresponding interface or inside the low-melting-point metal layer 3, thereby allowing the abrasive grains 5 to be further firmly adhered to the wire.

The high-melting-point metal layer 4 is effective even when a layer thickness thereof is relatively thin. In this sense, the high-melting-point metal layer 4 can be formed by performing electrolytic plating or non-electrolytic plating using Ni or a Ni alloy, or Cu or a Cu alloy. A plating thickness of the high-melting-point metal layer 4 is greater than 0.01µm but not greater than 5µm, preferably not less than 0.02µm and not greater than 2µm. When disposing the high-melting-point metal layer 4 in the mid-section of the low-melting-point metal layer 3 (not shown), the high-melting-point metal layer 4 is first plated on a first low-melting-point metal layer, followed by allowing a second low-melting-point metal layer to be layered on the aforementioned high-melting-point metal layer 4. When the plating thickness of the high-melting-point metal layer 4 is greater the upper limit, the time needed for plating becomes long and the productivity is disimproved accordingly. Further, when the plating thickness of the high-melting-point metal layer 4 is below the lower limit, there can not be expected a sufficient high-strengthening effect caused by the aforementioned diffused layer.

Further, diffusion between the high-melting-point metal and the low-melting-point metal can take place even below a melting point of the low-melting-point meal. In this sense, there can be formed a alloy phase of the high-melting-point metal and the low-melting-point metal by performing a heating treatment at a low temperature, thereby further strengthening the adhesion forces of the abrasive grains 5. Diffusion effect can be achieved when a Sn-based metal serving as a low-melting-point metal is treated at a temperature range of 100°C to 200°C, preferably, 150°C to 200°C, or when a Zn-based metal also serving as a low-melting-point metal is treated at a temperature range of 150°C to 400°C, preferably, 200°C to 350°C. When the temperature is below the lower limit, there can not be formed a diffused layer with a sufficient thickness. When the temperature is greater than the upper limit, significant coarsening of the structure occurs, thus reducing the strength of the adhesion force or the strength of the metal wire 2.

Next, abrasive grains are described.

As mentioned earlier, as the materials of the abrasive grains, there can be employed alumina, SiC, SiO₂, diamond and so on. Among them, diamond is most superior in terms of hardness. In order to improve the adhesion force between the solder 3 and the abrasive grains 5, it is preferred, also from the perspective of improving the wettability of the solder 3, that the abrasive grains 5 are coated in advance with Ni or Cu coating layers (not shown) via plating or the like, and that the abrasive grains thus obtained (referred to as "coated abrasive grains," hereafter) is used.

Particularly, when using diamond as the abrasive grains 5, there exists a weak binding force between the Ni or Cu coating layer and the diamond. A Ti (titanium) or Cr (chrome) film is preferred as a metallic film capable of chemically binding with the diamond. However, since both Ti and Cr contribute to disimproving the wettability of the solder 3, it is further preferred that the surfaces of the diamond abrasive grains 5 are first coated with Ti or Cr, followed by allowing the surface thus coated to be further coated with Ni or Cu, thereby obtaining multi-layer-coated abrasive grains (not shown). Since Ti and Cr are chemically bound with Ni and Cu, the strengths of bindings between the diamond abrasive grains 5 and the Ni or Cu coating layers are improved. Further, instead of employing a so-called single crystal diamond having a crystal habit surface with organized symmetry, a crushed diamond is preferred from the perspective of increasing an area of adhesion with respect to the metal wire 2.

Next, a metal wire is described.

For example, any one of the aforementioned metal wires can be used as the metal wire 2 with a high strength. Further, although no restriction is imposed on the kind of a wire, a high-carbon steel wire (a piano wire) or the like having a tensile strength of 3000MPa or larger is preferred as the metal wire 2 with a high strength, even from the perspective of strength and price. Furthermore, although the wire diameter of such wire can be 40µm to 400µm, it is preferred that the corresponding wire diameter is 80µm to 200µm. When the wire diameter is below the lower limit, the corresponding wire is likely to undergo breakage. When the wire diameter is greater than the upper limit, a cutting allowance becomes large, thus causing an object cut to undergo a significant loss.

Next, there is described a method for adhering abrasive grains using a low-melting-point metal.

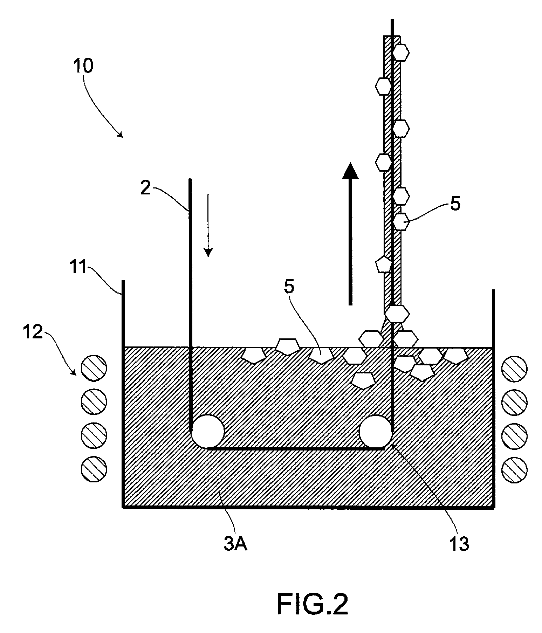

It is efficient to allow the abrasive grains 5 to be adhered to the metal wire 2 after the low-melting-point metal has gone through a melting process. An adhesion apparatus 10 shown in FIG.2 can be used for adhesion of the abrasive grains 5. The adhesion apparatus 10 comprises a melting tank 11, a heater 12 for heating the melting tank 11 and a releasing portion 13 for releasing the metal wire 2 into the melting tank 11. The melting tank 11 contains a low-melting-point metal 3A heated as well as melted by the heater 12 and used for hot-dip plating (referred to as "molten metal bath," hereafter), and the abrasive grains 5 mixed in the molten metal bath 3A. Since the specific gravities of the abrasive grains 5 are smaller than that of the low-melting-point metal, the abrasive grains 5 are floating in the vicinity of the surface of the molten metal bath 3A. The releasing portion 13 serves to release the metal wire 2 in the directions indicated by the arrows in FIG.2, and allow the metal wire 2 to be circulated in one direction inside the melting tank 11.

In the adhesion apparatus 10 thus constructed, the metal wire 2 is released into the melting tank 11 by means of the releasing portion 13. In this way, the metal wire 2 is allowed to be dipped into the molten metal bath 3A contained in the melting tank 11. The abrasive grains 5 are adhered to the metal wire 2 at the same time when the metal wire 2 dipped in the molten metal bath 3A is pulled out from the melting tank 11. In this sense, in the adhesion apparatus 10, the metal wire 2 is dipped into the molten metal bath 3A into which the abrasive grains 5 have been mixed, followed by pulling out such metal wire 2 so as to allow the abrasive grains 5 to be adhered thereto at the same time, thereby allowing the abrasive grains 5 to be efficiently adhered to the metal wire 2. Accordingly, there can be provided an inexpensive saw wire 1.

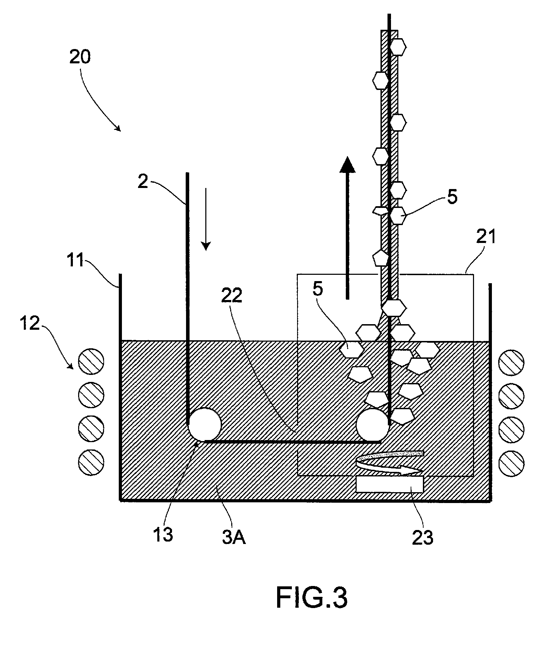

However, the present invention is not limited to the aforementioned embodiment. As a matter of fact, various modifications can be appropriately made within the scope of the gist of the present invention. For example, the adhesion apparatus 10 can be configured to be able to regulate an adhesion density of the abrasive grains 5. In FIG.3, the same constituents as those of the adhesion apparatus 10 shown in FIG.2 are given the same corresponding numerical references and symbols. According to an adhesion apparatus 20 shown in FIG.3, there is further provided a cylindrical portion 21 surrounding a release portion of the metal wire 2 in the melting tank 11. The cylindrical portion 21 is opened in a vertical direction and is so held by the melting tank 11 that a lower end thereof is communicated with the molten metal bath in the melting tank 11. Further, a through hole 22 is provided on a side surface of the cylindrical portion 21 so that the metal wire 2 is allowed to move in and out thereof. Furthermore, at the bottom of the melting tank 11, a stirrer 23 is rotatably provided on a lower portion of the cylindrical portion 21.

In the adhesion apparatus 20 thus constructed, the stirrer 23 is rotated by means of a driving unit not shown, thus allowing the molten metal bath 3A to be rotated around a rotation axis which is a pulling-out direction of the metal wire 2. In this way, the adhesion apparatus 20 serves to stabilize the supplying of the abrasive grains 5 and stir the abrasive grains 5, thereby allowing a given amount of the abrasive grains 5 to be adhered to the metal wire 2.

Further, the molten metal bath 3A is preferably oscillated in order to regulate the adhesion density of the abrasive grains 5. In this case, a dispersion effect can be achieved within a frequency range of 300Hz to 500Hz.

Furthermore, by disposing an inflow hole and an outflow hole of the molten metal bath, although not shown, the adhesion density of the abrasive grains 5 can be regulated in terms of an inflow, an inflow location and an outflow location. Further, the molten metal bath can be ejected as a jet flow from a front end of a nozzle not shown. In this case, the metal wire can be introduced into the nozzle so as to allow the abrasive grains to be adhered thereto. Although the nozzle is preferably configured to point upward in the vertical direction, the abrasive grains can also be adhered to the metal wire even if the nozzle is configured to point to a horizontal direction. The thickness of the molten metal bath is regulated by managing the viscosity thereof through a melting temperature adjustment, and varying a speed at which the metal wire is pulled out. Coating via a molten metal bath is superior to other methods, particularly in productivity.

Further, although the aforementioned embodiment describes a method for adhering the abrasive grains 5 to the metal wire 2 using the adhesion apparatuses 10, 20, the present invention is not limited to this arrangement. For example, although not shown, there can be prepared a mixture by dispersing the abrasive grains into a paste obtained by mixing together a low-melting-point metal powder and a flux component. The mixture thus prepared is then either applied or printed on the metal wire, followed by subjecting such metal wire to a heating treatment in a furnace so as to melt the low-melting-point metal, such low-melting-point metal being solidified thereafter so as to allow the abrasive grains to be adhered to the metal wire.

### Example

### (Example 1)

A saw wire was obtained by allowing multi-layer-coated diamond abrasive grains to be adhered to a steel wire (tensile strength: 3450MPa) coated with brass (Cu:Zn = 2:1 (mol ratio), about 50nm thick) and having a diameter of 160µm, using a Sn-Ag-based solder to which 0.05% by mass of Fe and 0.05% by mass of Ni had been added, such multi-layer-coated diamond abrasive grains having an average grain diameter of 35µm and having been treated with a Ti plating lower layer of 50nm and a Ni plating upper layer of 3µm. A manufacturing method of this saw wire is described hereunder.

At a mass ratio of solder: abrasive grains: flux = 3:2:4, there was prepared a mixture in paste form by stirring and mixing together the aforementioned abrasive grains; solder balls to which 0.05% by mass of Fe and 0.05% by mass of Ni had been added, and having an average grain diameter of 30µm and a composition of 96.5% by mass of Sn and 3.4% by mass of Ag; and a flux containing zinc halide.

A solder coating treatment was then performed by cleansing a steel wire with acetone, and then allowing the steel wire thus cleansed to pass through the solder which was melted at 250°C and to which 0.05% by mass of Fe and 0.05% by mass of Ni had been added and having the composition of 96.5% by mass of Sn and 3.4% by mass of Ag, at a speed of 50cm/s, and at the same time an excessive amount of solder was removed, thereby allowing the steel wire to be coated with a solder layer of about 3µm thickness.

The steel wire subjected to the solder coating treatment was then caused to pass through a container containing the aforementioned mixture in paste form, followed by being drawn from a nozzle end having a hole with a diameter of about 200µm, thereby allowing the mixture in paste form to be further applied on the steel wire. The steel wire further treated with the mixture in paste form in this way was then caused to pass through a tube furnace heated at 270°C (soaking area length: about 40cm), at a speed of 0.1m/min, so as to melt the solder, followed by allowing the abrasive grains to be adhered to the steel wire via cooling. The steel wire thus obtained was further caused to pass through a cleansing tank so as to remove excessive flux component, followed by winding the steel wire around a reel, and thus obtaining the saw wire.

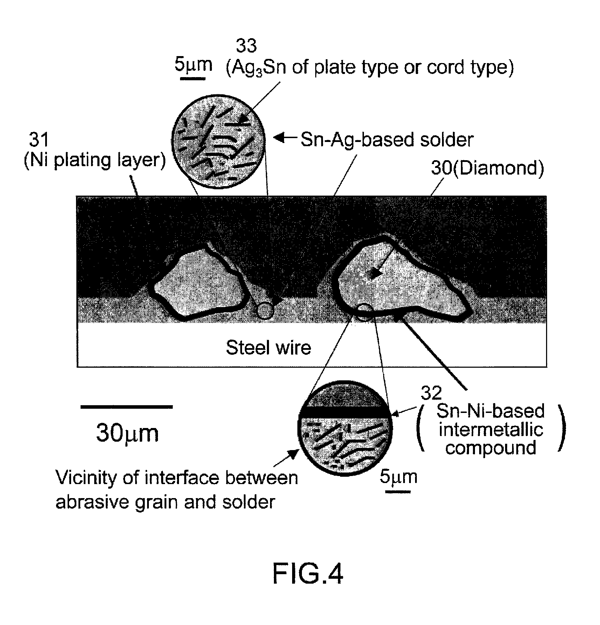

FIG.4 schematically shows a structure around the abrasive grains of the saw wire thus obtained. Through elemental analysis, there was observed a structure in which a Ni plating metal layer 31 of 1 to 2µm was formed around a diamond 30, a Sn-Ni-based intermetallic compound 32 of 1 to 2µm was further formed therearound, and a Sn-Ni-based intermetallic compound 33 was distributed also in the solder. Further, there was observed in the solder a structure in which Sn-Ag-based intermetallic compounds of a plate type having a thickness of about 1 to 2µm or a cord type having a diameter of about 1 to 2µm, were dispersed or connected to one another to form a network. Furthermore, after analyzing the structures of the aforementioned intermetallic compounds, it was found that Cu was slightly contained also in the Sn-Ni-based intermetallic compound, at a molar ratio of (Sn:Ni:Cu) = (55:42:3), and that the molar ratio of the Sn-Ag-based intermetallic compound was (Sn:Ag) = (25:75). Fe did not contribute to forming an intermetallic compound in the solder. As a matter of fact, while a high concentration of Fe was observed on the surface of the saw wire, Fe was observed less as a distance from the surface of the saw wire increased. Furthermore, Fe was found to be concentrated also on the Ni plating surface of the abrasive grains. Accordingly, Fe was actually dissolved in the solder to help increase the strength thereof.

The saw wire with intermetallic compounds existing around the diamond grains was then attached to a laboratory wire saw apparatus (CS-203) at a length of 30m, so as to evaluate a cutting performance of the saw wire by reciprocating the same under a condition in which a wire tensile force was 14.7N, a wire moving speed was 100m/min and a applied load was 100g (the weight of a weight used to press a work against the wire). Further, water was used as a cooling solvent. Here, a cutting speed concerning a silicon single crystal with a diameter of 20mm was 2.6mm/min. Furthermore, it was confirmed that almost no abrasive grains had dropped off from the saw wire in this cutting experiment.

In this sense, it became evident that there could be obtained a solder-adhesive saw wire with a superior cutting performance.

### (Example 2)

A saw wire was obtained by allowing multi-layer-coated diamond abrasive grains to be adhered to a steel wire (tensile strength: 3450MPa) coated with Cu (about 50nm thick) and having a diameter of 160µm, using a Sn-Ag-Cu-based solder to which 0.05 by mass of Ni had been added, such multi-layer-coated diamond abrasive grains having an average grain diameter of 35µm and having been treated with a Cr plating lower layer of 50nm and a Ni plating upper layer of 3µm. A manufacturing method of this saw wire is described hereunder.

At a mass ratio of solder: abrasive grains: flux = 3:2:3, there was prepared a mixture in paste form by stirring and mixing together the aforementioned abrasive grains; solder balls having an average grain diameter of 30µm and a composition of about 96.5% by mass of Sn, 3.0% by mass of Ag and 0.5 by mass of Cu; and a flux containing zinc halide.

A solder coating treatment was then performed by cleansing a steel wire with acetone, and then allowing the steel wire thus cleansed to pass through the solder which was melted at 250°C and to which 0.05 by mass of Ni had been added and having the composition of about 96.5% by mass of Sn, 3.0% by mass of Ag and 0.5% by mass of Cu, at a speed of 50cm/s. In this way, an excessive amount of solder could be removed at the same time, thereby allowing the steel wire to be coated with a solder layer of about 3µm.

The steel wire subjected to the solder coating treatment was then caused to pass through a container containing the aforementioned mixture in paste form, followed by being drawn from a nozzle end having a hole with a diameter of about 200µm, thereby allowing the mixture in paste form to be further applied on the steel wire. The steel wire further treated with the mixture in paste form in this way was then caused to pass through a tube furnace heated at 270°C (soaking area length: about 40cm), at a speed of 0.1m/min, so as to melt the solder, followed by allowing the abrasive grains to be adhered to the steel wire via cooling. The steel wire thus obtained was further caused to pass through a cleansing tank so as to remove excessive flux component, followed by winding the steel wire around a reel, and thus obtaining the saw wire.

A structure around the abrasive grains of the saw wire thus obtained was analyzed through elemental analysis. There was observed a structure in which a Ni plating metal layer of 1 to 2µm was formed around a diamond, a Sn-Ni-Cu-based intermetallic compound of 2 to 3µm was further formed therearound, and a Sn-Ni-Cu-based intermetallic compound was distributed also in the solder. Further, there was observed in the solder a structure in which there were dispersed Sn-Ag-based intermetallic compounds of a plate type having a thickness of about 1 to 2µm or a cord type having a diameter of about 1 to 2µm, and Sn-Cu-based intermetallic compound grains with a grain diameter of 1 to 2µm. Furthermore, after analyzing the structures of the aforementioned intermetallic compounds, it was found that the molar ratio of the Sn-Ni-Cu-based intermetallic compound was (Sn:Ni:Cu) = (40:26:34), and that the molar ratio of the Sn-Ag-based intermetallic compound was (Sn:Ag) = (25:75).

The saw wire with intermetallic compounds existing around the diamond grains was then attached to a laboratory wire saw apparatus (CS-203) at a length of 30m, so as to evaluate a cutting performance of the saw wire by reciprocating the same under a condition in which a wire tensile force was 14.7N, a wire moving speed was 100m/min and an applied load was 100g. Further, water was used as a cooling solvent. Here, a cutting speed concerning a silicon single crystal with a diameter of 20mm was 2.4mm/min. Furthermore, it was confirmed that almost no abrasive grains had dropped off from the saw wire in this cutting experiment.

In this sense, it became evident that there could be obtained a solder-adhesive saw wire with a superior cutting performance.

### (Example 3)

A saw wire was obtained by allowing multi-layer-coated diamond abrasive grains to be adhered to a steel wire (tensile strength: 3300MPa) coated with brass (Cu:Zn = 2:1 1 (mol ratio), about 50nm thick) and having a diameter of 180µm, using a Sn-Ag-Cu-based solder to which 0.05% by mass of Fe had been added, such multi-layer-coated diamond abrasive grains having an average grain diameter of 40µm and having been treated with a Ti plating lower layer of 50nm and a Ni plating upper layer of 4µm. A manufacturing method of this saw wire is described hereunder.

At a mass ratio of solder: abrasive grains: flux = 2:2:3, there was prepared a mixture in paste form by stirring and mixing together the aforementioned abrasive grains; solder balls having an average grain diameter of 30µm and a composition of 94.0% by mass of Sn, 5.0% by mass of Ag and 1.0% by mass of Cu; and a flux containing zinc halide.

A solder coating treatment was then performed by cleansing a steel wire with acetone, and then allowing the steel wire thus cleansed to pass through the solder which was melted at 250°C and whose composition was 94.0% by mass of Sn, 5.0% by mass of Ag and 1.0% by mass of Cu, at a speed of 50cm/s. In this way, an excessive amount of solder could be removed at the same time, thereby allowing the steel wire to be coated with a solder layer of about 3µm.

The steel wire subjected to the solder coating treatment was then caused to pass through a container containing the aforementioned mixture in paste form, followed by being drawn from a nozzle end having a hole with a diameter of about 250µm, thereby allowing the mixture in paste form to be further applied on the steel wire. The steel wire further treated with the mixture in paste form in this way was then caused to pass through a tube furnace heated at 280°C (soaking area length: about 40cm), at a speed of 0.15m/min, so as to melt the solder, followed by allowing the abrasive grains to be adhered to the steel wire via cooling. The steel wire thus obtained was further caused to pass through a cleansing tank so as to remove excessive flux component, followed by winding the steel wire around a reel, and thus obtaining the saw wire.

A structure around the abrasive grains of the saw wire thus obtained was analyzed through elemental analysis. There was observed a structure in which a Ni plating metal layer of 1 to 2µm was formed around a diamond, a Sn-Ni-Cu-based intermetallic compound of 2 to 3µm was further formed therearound, and a Sn-Ni-Cu-based intermetallic compound was distributed also in the solder. Further, there was observed in the solder a structure in which there were dispersed Sn-Ag-based intermetallic compounds of a plate type having a thickness of about 1 to 2µm or a cord type having a diameter of about 1 to 2µm, and Sn-Cu-based intermetallic compound grains with a grain diameter of 1 to 2µm. Furthermore, after analyzing the structures of the aforementioned intermetallic compounds, it was found that the molar ratio of the Sn-Ni-Cu-based intermetallic compound was (Sn:Ni:Cu) = (43:25:32), and that the molar ratio of the Sn-Ag-based intermetallic compound was (Sn:Ag) = (25:75), and that the molar ration of the Sn-Cu-based intermetallic compound was (Sn:Cu) = (45:55).

The saw wire with intermetallic compounds existing around the diamond grains was then attached to a laboratory wire saw apparatus (CS-203) at a length of 30m, so as to evaluate a cutting performance of the saw wire under a condition in which a wire tensile force was 1000MPa, a wire moving speed was 500m/min and an applied load was 100g. Further, water was used as a cooling solvent. Here, a cutting speed concerning a silicon single crystal with a diameter of 20mm was 2.2mm/min. Furthermore, it was confirmed that almost no abrasive grains had dropped off from the saw wire in this cutting experiment.

In this sense, it became evident that there could be obtained a solder-adhesive saw wire with a superior cutting performance.

### (Example 4)

In accordance with Example 1 through Example 3, there were manufactured saw wires under various conditions shown in Table 1. Further, cutting performances of those saw wires were compared to one another. Table 1 shows the conditions under which the saw wires were manufactured and the performances thereof. Further, according to the structure of the saw wire obtained in each example, Ni plating metal layers of 1 to 2µm were observed around the abrasive grains, and Sn-Ni-based intermetallic compounds of 1 to 2µm were further formed therearound. In No.4-25, dispersion of SnBaO₃ was observed. Further, in No.4-27, a Sn-B-based intermetallic compound was observed. Furthermore, in No.4-28, NiMoO₄ was observed around the abrasive grains. Here, an observation was made on the surface of the saw wire subjected to the aforementioned cutting performance evaluation, to study the condition concerning the abrasive grains dropping off from the saw wire. The number of the remaining abrasive grains was evaluated using the following criteria in which a result as great as or greater than "Triangle" was considered as tolerable to practical use.

Double Circle: almost no drop-offs observed
Circle: a few drop-offs observed
Triangle: locations of drop-offs clearly identifiable
Cross: drop-offs observed overall.

As are the cases with Example 1 and Example 2, the saw wires of No.4-1 through 4-9, and No.4-16 through 4-28 indicated that there could be obtained a solder-adhesive saw wire with abrasive grains adhered thereto and having a superior cutting performance.

As for the saw wires of No.4-10, 4-11, 4-15, 4-29 and 4-30, it was assumed that intermetallic compounds containing Cu on an interface between the solder and the Cu plating layer had thickened since the plating metal with which the abrasive grains were covered was Cu, thus easily resulting in breakages in the vicinity of the intermetallic compounds and undermining the cutting performances of the corresponding saw wires. Further, as for compositions of the saw wires of No.4-12, 4-13, 4-15, it was assumed that the strength of the solder had been decreased since no Ag was contained therein, thus undermining the cutting performances of the corresponding saw wires. Furthermore, as for the saw wire of No.4-31, it was assumed that the strength of the solder had been decreased since an excessive amount of Ag was contained therein, thus undermining the cutting performance thereof. Furthermore, as for the saw wire of No.4-32, no intermetallic compound was formed therein, thereby causing all the abrasive grains to drop off therefrom, and thus resulting in an extremely low cutting speed.

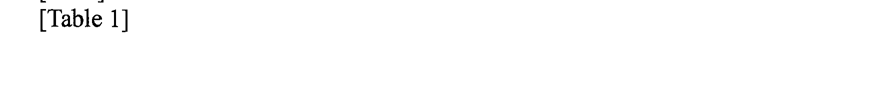

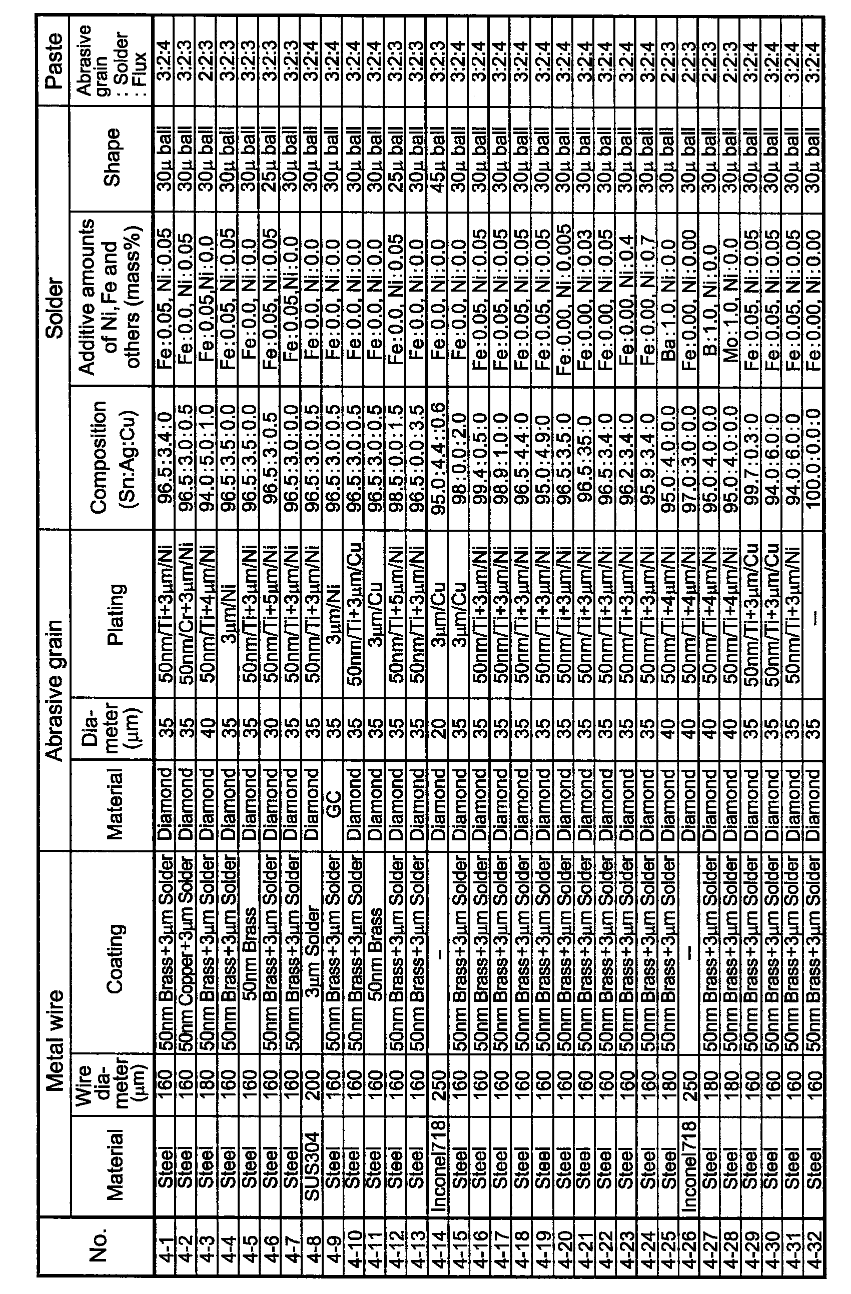

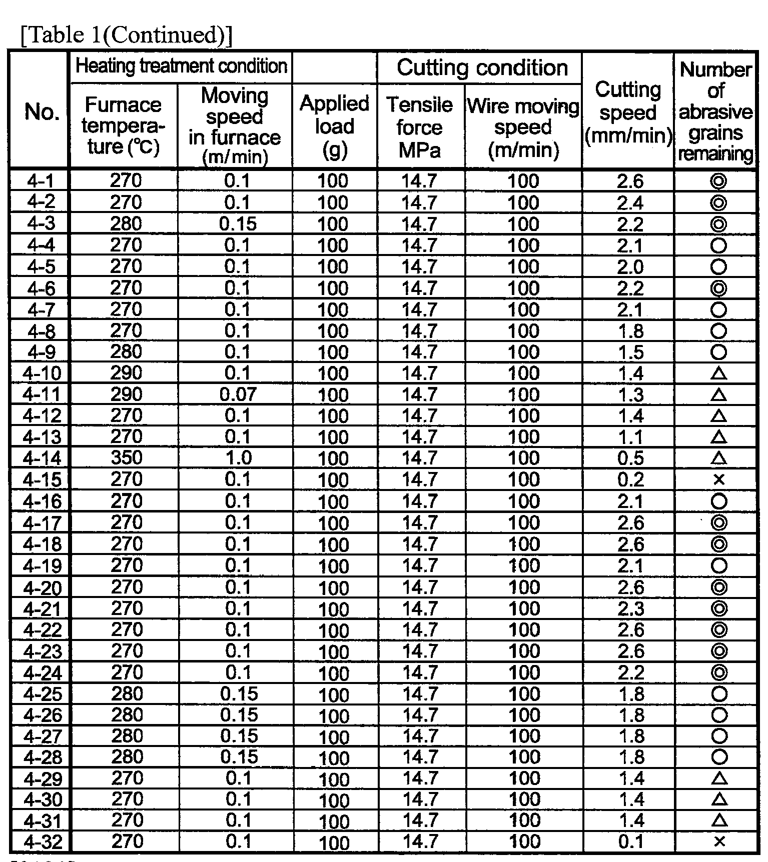

### (Example 5)

A saw wire was obtained by allowing multi-layer-coated diamond abrasive grains to be adhered to a steel wire (tensile strength: 3450MPa) coated with brass (Cu:Zn = 2:1 (mol ratio), about 50nm thick) and having a diameter of 160µm, using a Sn-Zn-Bi-based solder, such multi-layer-coated diamond abrasive grains having an average grain diameter of 35µm and having been treated with a Ti plating lower layer of 50nm and a Ni plating upper layer of 3µm. A manufacturing method of this saw wire is described hereunder.

At a mass ratio of solder: abrasive grains: flux = 3:2:3, there was prepared a mixture in paste form by stirring and mixing together the aforementioned abrasive grains; solder balls having an average grain diameter of 30µm and a composition of 89% by mass of Sn, 8% by mass of Zn and 3% by mass of Bi; and a flux containing zinc halide.

A solder coating treatment was then performed by cleansing a steel wire with acetone, and then allowing the steel wire thus cleansed to pass through the solder which was melted at 290°C and whose composition was 89% by mass of Sn, 8% by mass of Zn and 3% by mass of Bi, at a speed of 50cm/s. In this way, an excessive amount of solder could be removed at the same time, thereby allowing the steel wire to be coated with a solder layer of about 3µm.

The steel wire subjected to the solder coating treatment was then caused to pass through a container containing the aforementioned mixture in paste form, followed by being drawn from a nozzle end having a hole with a diameter of 300µm, thereby allowing a given amount of the mixture in paste form to be further applied on the steel wire. The steel wire further treated with the mixture in paste form in this way was then caused to pass through a tube furnace heated at 280°C (soaking area length: about 40cm), at a speed of 0.1m/min, so as to melt the solder, followed by allowing the abrasive grains to be adhered to the steel wire via cooling. The steel wire thus obtained was further caused to pass through a cleansing tank so as to remove excessive flux component, followed by winding the steel wire around a reel, and thus obtaining the saw wire.

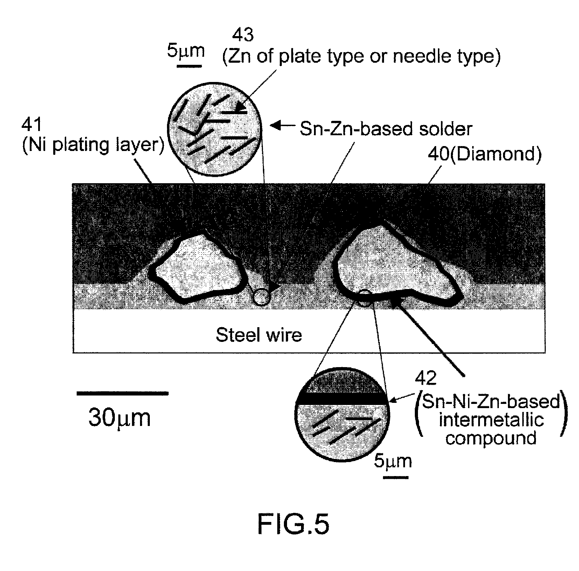

A structure around the abrasive grains of the saw wire thus obtained was analyzed through elemental analysis, and the result thereof is shown in FIG.5. There was observed a structure in which a Ni plating metal layer 41 of 1 to 2µm was formed around a diamond 40, a Sn-Ni-Zn-based intermetallic compound 42 of about 1µm was further formed therearound. Further, there was observed in the solder a structure 43 in which there were dispersed Zn of a plate type having a thickness of about 1 to 2µm or a needle type having a diameter of about 1 to 2µm.

This saw wire was then attached to a laboratory wire saw apparatus (CS-203) at a length of 30m, so as to evaluate a cutting performance of the saw wire by reciprocating the same under a condition in which a wire tensile force was 14.7N, a wire moving speed was 100m/min and an applied load was 100g (the weight used to press a work against the wire). Further, water was used as a cooling solvent. Here, a cutting speed concerning a silicon single crystal with a thickness of 20mm was 3.2mm/min. Furthermore, it was confirmed that almost no abrasive grains had dropped off from the saw wire during this cutting experiment, thus indicating that the abrasive grains had favorably remained adhered to the saw wire.

In this sense, it became evident that there could be obtained a solder-adhesive saw wire with a superior cutting performance.

### (Example 6)

A saw wire was obtained by allowing multi-layer-coated diamond abrasive grains to be adhered to a steel wire (tensile strength: 3300MPa) coated with copper (about 50nm thick) and having a diameter of 180µm, using a Sn-Zn-based solder, such multi-layer-coated diamond abrasive grains having an average grain diameter of 30µm and having been treated with a Ti plating lower layer of 50nm and a Ni plating upper layer of 4µm. A manufacturing method of this saw wire is described hereunder.

At a mass ratio of solder: abrasive grains: flux = 2:2:3, there was prepared a mixture in paste form by stirring and mixing together: the aforementioned abrasive grains; solder balls having an average grain diameter of 30µm and a composition of 91% by mass of Sn and 9% by mass of Zn; and a flux containing zinc halide.

A solder coating treatment was then performed by cleansing a steel wire with acetone; and then allowing the steel wire thus cleansed to pass through the solder which was melted at 250°C and whose composition was 91% by mass of Sn and 9% by mass of Zn, at a speed of 50cm/s. In this way, an excessive amount of solder could be removed at the same time, thereby allowing the steel wire to be coated with a solder layer of about 3µm.

The steel wire subjected to the solder coating treatment was then caused to pass through a container containing the aforementioned mixture in paste form, followed by being drawn from a nozzle end having a hole with a diameter of 350µm, thereby allowing a given amount of the mixture in paste form to be further applied on the steel wire. The steel wire further treated with the mixture in paste form in this way was then caused to pass through a tube furnace heated at 280°C (soaking area length: about 40cm), at a speed of 0.15m/min, so as to melt the solder, followed by allowing the abrasive grains to be adhered to the metal wire via cooling. The steel wire thus obtained was further caused to pass through a cleansing tank so as to remove excessive flux component, followed by winding the steel wire around a reel, and thus obtaining the saw wire.

As for a structure of the saw wire thus obtained, there was observed a structure in which a Ni plating metal layer of 1 to 2µm was formed around a diamond, a Sn-Ni-Cu-based intermetallic compound of about 1µm was further formed therearound. Further, there was observed in the solder a_structure in which there were dispersed Zn of a plate type having a thickness of about 1 to 2µm or a needle type having a diameter of about 1 to 2µm.

The saw wire with intermetallic compounds existing around the diamond grains was then attached to a laboratory wire saw apparatus (CS-203) at a length of 30m, so as to evaluate a cutting performance of the saw wire under the same condition as Example 5 in which a wire tensile force was 14.7N, a wire moving speed was 100m/min and an applied load was 100g. Further, water was used as a cooling solvent. Here, a cutting speed concerning a silicon single crystal with a thickness of 20mm was 3.1mm/min. Further, it was confirmed that almost no abrasive grains had dropped off from the saw wire during this cutting experiment, thus indicating that the abrasive grains had favorably remained adhered to the saw wire.

In this sense, it became evident that there could be obtained a solder-adhesive saw wire with a superior cutting performance.

### (Example 7)

In accordance with Example 5 and Example 6, there were manufactured saw wires under various conditions shown in Table 2. Further, cutting performances of those saw wires were compared to those of the saw wires manufactured using other solder materials. Table 2 shows the conditions under which the saw wires were manufactured. Table 3 further shows the conditions (remaining conditions) under which the saw wires were manufactured and evaluation results thereof. As for the saw wires excluding those obtained in No.7-8, No7-16 through 17, No.7-19 through 21, No.7-37, and No.7-40 through 42, Ni plating metal layers of 1 to 2µm were observed around the abrasive grains, and a Sn-Ni-Zn based intermetallic compound of about 1µm were further formed therearound. In No.7-30, an intermetallic compound of BaSnO₃ was observed around the abrasive grains, while in No.7-31, there was also observed a Pt-Sn-Ni-based intermetallic compound. Further, in No.7-6, there was observed a Sn-Ni-In-based intermetallic compound. In No.7-8 and No.7-37, a Cu plating metal layer was observed around the diamond grain, and a Sn-Cu-Zn-based intermetallic compound of about 2 to 3µm was further formed therearound. Furthermore, there was evaluated a cutting performance of a saw wire (No.7-20) manufactured in accordance with a method similar to a manufacturing method described in an Example 3 of Japanese Patent No.4008660. Furthermore, as a comparative example, there was also evaluated a cutting performance of a diamond-Ni electrodeposited wire (No.7-24) offered commercially. Here, an observation was made on the surface of the saw wire subjected to the aforementioned cutting performance evaluation, to study the condition concerning the abrasive grains dropping off from the saw wire. The number of the remaining abrasive grains was evaluated using the following criteria in which a result as great as or greater than "Triangle" was considered as tolerable to practical use.

Double Circle: almost no drop-offs observed
Circle: a few drop-offs observed
Triangle: locations of drop-offs clearly identifiable
Cross: drop-offs observed overall.

As a result, it became evident that the saw wires with the abrasive grains adhered thereto using the Sn-Zn-based solder (No.7-1 through No.7-14, No.7-25 through No.7-41) were superior to other saw wires (No.7-15 through No.7-24, No.7-42) in cutting performance.

**[Table 2]**

| No. | Metal wire | | | Abrasive grain | | | Solder | | Paste |
|---|---|---|---|---|---|---|---|---|---|
| | Material | Wire diameter (µm) | Coating | Material | Diameter (µm) | Plating | | Shape | Abrasive grain :Solder : Flux |
| 7-1 | Steel | 160 | 50nm Brass+3µm Solder | Diamond | 35 | 50nm/Ti+3µm/Ni | Sn:Zn:Bi = 89:8:3 | 30µm ball | 3:2:3 |
| 7-2 | Steel | 180 | 50nm Copper+3µm Solder | Diamond | 30 | 50nm/Ti+4µm/Ni | Sn:Zn = 91:9 | 30µm ball | 2:2:3 |
| 7-3 | Steel | 180 | 50nm Zinc+3µm Solder | Diamond | 30 | 50nm/Ti+4µm/Ni | Sn:Zn = 91:9 | 30µm ball | 2:2:3 |
| 7-4 | Steel | 160 | 50nm Brass+3µm Solder | Diamond | 35 | 3µm/Ni | Sn:Zn:Bi = 89:8:3 | 30µm ball | 3:2:4 |
| 7-5 | Steel | 160 | 50nm Brass | Diamond | 35 | 50nm/Ti+3µm/Ni | Sn:Zn:Sb = 90:9:1 | 30µm ball | 3:2:3 |
| 7-6 | Steel | 160 | 50nm Brass | Diamond | 35 | 50nm/Ti+3µm/Ni | Sn:Zn:In = 87:9:4 | 30µm ball | 3:2:3 |
| 7-7 | Steel | 160 | 50nm Brass+3µm Solder | Diamond | 35 | 50nm/Ti+5µm/Ni | Sn:Zn:Bi = 89:9:2 | 25µm ball | 3:2:3 |
| 7-8 | Steel | 160 | 50nm Brass+3µm Solder | Diamond | 35 | 50nm/Ti+5µm/Cu | Sn:Zn:Bi = 89:8:3 | 25µm ball | 3:2:3 |
| 7-9 | Steel | 180 | 50nm Copper+3µm Solder | Diamond | 30 | 50nm/Ti+4µm/Ni | Sn:Zn = 96:4 | 30µm ball | 2:2:3 |
| 7-10 | Steel | 180 | 50nm Brass+3µm Solder | Diamond | 30 | 50nm/Ti+4µm/Ni | Sn:Zn = 71:29 | 30µm ball | 2:2:3 |
| 7-11 | SUS304 | 160 | 3µm Solder | Diamond | 35 | 50nm/Cr+3µm/Ni | Sn:Zn:Bi = 89:8:3 | 30µm ball | 3:2:3 |
| 7-12 | SUS316 | 160 | 50nm Zinc+3µm Solder | Diamond | 35 | 50nm/Cr+3µm/Ni | Sn:Zn:Ni = 93:6.2:0.8 | 30µm ball | 3:2:3 |
| 7-13 | Steel | 160 | 50nm Brass+3µm Solder | GC | 35 | 50nm/Ti+3µm/Ni | Sn:Zn:Fe = 97:2.4:0.6 | 30µm ball | 3:2:3 |
| 7-14 | Steel | 160 | 50nm Brass+3µm Solder | WA | 35 | 50nm/Ti+3µm/Ni | Sn:Zn:Bi = 89:8:3 | 30µm ball | 3:2:3 |
| 7-15 | Steel | 160 | 50nm Brass+3µm Solder | Diamond | 35 | 50nm/Ti+3µm/Ni | Sn:Bi = 42:58 | 30µm ball | 3:2:3 |
| 7-16 | Steel | 160 | 50nm Brass+3µm Solder | Diamond | 35 | 50nm/Ti+3µm/Cu | Sn:Pb = 63:37 | 30µm ball | 3: 2: |
| 7-17 | Steel | 160 | 50nm Brass+3µm Solder | Diamond | 35 | 50nm/Ti+3µm/Cu | Sn:Sb = 95:5 | 30µm ball | 3:2:4 |
| 7-18 | Steel | 160 | 50nm Brass | Diamond | 35 | 3µm/Nl | Sn:Cu = 99.3:0.7 | 30µm ball | 3:2:3 |
| 7-19 | Steel | 160 | 50nm Brass+3µm Solder | Diamond | 35 | 3µm/Cu | Sn:Ag:Cu = 96:3.5:0.5 | 30µm ball | 3:2:4 |
| 7-20 | Inconel 718 | 250 | - | Diamond | 20 | 3µm/Cu | Sn:Aa:Cu = 95:4:1 | 45µm ball | 3:2:3 |
| 7-21 | SUS304 | 200 | 3µm Solder | GC | 35 | 3µm/Cu | Sn:Ag = 96.5:3.5 | 30µm ball | 3:2:3 |
| 7-22 | Steel | 160 | 3µm Cu Solder | WA | 35 | 3µm/Ni | Sn:Pb = 63:37 | 30µm ball | 3:2:3 |
| 7-23 | SUS316 6 | 200 | 3µm Solder | Diamond | 35 | 50nm/Ti+3µm/Ni | Sn:Pb = 63:37 | 30µm ball | 3:2:4 |
| 7-24 | Steel | 150 | 35µmNi | Diamond | 20 | 5µm/Ni | - | - | - |
| 7-25 | Steel | 180 | 50nm Copper+3µm Solder | Diamond | 30 | 50nm/Ti+4µm/Ni | Sn:Zn = 99.5:0.5 | 30µm ball | 2:2:3 |
| 7-26 | Steel | 180 | 50nm Brass+3µm Solder | Diamond | 30 | 50nm/Ti+4µm/Ni | Sn:Zn = 64:36 | 30µm ball | 2:2:3 |
| 7-27 | Steel | 180 | 50nm Copper+3µm Solder | Diamond | 30 | 50nm/Ti+4µm/Ni | Sn:Zn = 88:12 | 30µm ball | 2:2:3 |
| 7-28 | Steel | 180 | 50nm Brass+3µm Solder | Diamond | 30 | 50nm/Ti+4µm/Ni | Sn:Zn = 87:13 | 30µm ball | 2:2:3 |
| 7-29 | Steel | 180 | 50nm Copper+3µm Solder | Diamond | 30 | 50nm/Ti+4µm/Ni | Sn:Zn = 95:5 | 30µm ball | 2:2:3 |
| 7-30 | Steel | 160 | 50nm Zinc+3µm Solder | Diamond | 35 | 50nm/Cr+3µm/Ni | Sn:Zn:Ba = 93:5:2 | 30µm ball | 3:2:3 |
| 7-31 | Steel | 160 | 50nm Zinc+3µm Solder | Diamond | 35 | 50nm/Cr+3µm/Ni | Sn:Zn:Pt = 92:6:2 | 30µm ball | 3:2:3 |
| 7-32 | Steel | 160 | 50nm Zinc+3µm Solder | Diamond | 35 | 50nm/Cr+3µm/Ni | Sn:Zn:As = 90:6:4 | 30µm ball | 3:2:3 |
| 7-33 | Steel | 160 | 50nm Brass+3µm Solder | Diamond | 35 | 50nm/Ti+3µm/Ni | Sn:Zn:Bi = 89:7.6:0.4 | 30µm ball | 3:2:3 |
| 7-34 | Steel | 160 | 50nm Brass+3µm Solder | Diamond | 35 | 50nm/Ti+3µm/Ni | Sn:Zn:Bi = 89:7.5:0.5 | 30µm ball | 3:2:3 |
| 7-35 | Steel | 160 | 50nm Brass+3µm Solder | Diamond | 35 | 50nm/Ti+3µm/Ni | Sn:Zn:Bi = 87:8:5 | 30µm ball | 3:2:3 |
| 7-36 | Steel | 160 | 50nm Brass+3µm Solder | Diamond | 35 | 50nm/Ti+3µm/Ni | Sn:Zn:Bi = 86:8:6 | 30µm ball | 3:2:3 |
| 7-37 | Steel | 160 | 50nm Brass+3µm Solder | Diamond | 35 | 3µm/Cu | Sn:Zn:Bi = 89:8:3 | 30µm ball | 3:2:4 |
| 7-38 | Inconel 718 | 250 | - | Diamond | 20 | 50nm/Ti+3µm/Ni | Sn:Zn:Bi = 89:8:3 | 30µm ball | 3:2:4 |
| 7-39 | Steel | 160 | - | Diamond | 35 | 50nm/Ti+4µm/Ni | Sn:Zn = 99.5:0.5 | 30µm ball | 3:2:4 |
| 7-40 | Steel | 160 | - | Diamond | 35 | - | Sn:Zn:Bi = 89:8:3 | 30µm ball | 3:2:4 |
| 7-41 | Steel | 160 | 50nm Brass+3µm Solder | Diamond | 35 | - | Sn:Zn = 99.5:0.5 | 30µm ball | 3:2:4 |
| 7-42 | Steel | 160 | 50nm Zinc +3µm Solder | Diamond | 35 | - | Sn = 100 | 30µm ball | 3:2:3 |

| | | | | | | | | | |
|---|---|---|---|---|---|---|---|---|---|
| *No.7-24: Commercially-supplied Ni electrodeposited wire (nominal:φ200µm) | | | | | | | | | |

**[Table 3]**

| No. | Heating treatment condition | | Cutting condition | | | Cutting speed (mm/min) | Number of abrasive grains remaining |
|---|---|---|---|---|---|---|---|
| | Furnace temperature (°C) | Moving speed in furnace (m/min) | Applied load (g) | Tensile force (N) | Wire moving speed (m/min) | | |
| 7-1 | 280 | 0.1 | 100 | 14.7 | 100 | 3.2 | ⓞ |
| 7-2 | 280 | 0.15 | 100 | 14.7 | 100 | 3.1 | ⓞ |
| 7-3 | 280 | 0.15 | 100 | 14.7 | 100 | 3.2 | ⓞ |
| 7-4 | 270 | 0.1 | 100 | 14.7 | 100 | 2.9 | ⓞ |
| 7-5 | 270 | 0.1 | 100 | 14.7 | 100 | 3.0 | ⓞ |
| 7-6 | 270 | 0.1 | 100 | 14.7 | 100 | 2.8 | ⓞ |
| 7-7 | 270 | 0.1 | 100 | 14.7 | 100 | 3.0 | ⓞ |
| 7-8 | 270 | 0.1 | 100 | 14.7 | 100 | 2.4 | ○ |
| 7-9 | 280 | 0.15 | 100 | 14.7 | 100 | 2.9 | ⓞ |
| 7-10 | 310 | 0.08 | 100 | 14.7 | 100 | 3.1 | ⓞ |
| 7-11 | 350 | 0.1 | 100 | 14.7 | 100 | 2.7 | ○ |
| 7-12 | 320 | 0.1 | 100 | 14.7 | 100 | 2.8 | ○ |
| 7-13 | 270 | 0.1 | 100 | 14.7 | 100 | 2.3 | ○ |
| 7-14 | 270 | 0.1 | 100 | 14.7 | 100 | 2.1 | ○ |
| 7-15 | 270 | 0.1 | 100 | 14.7 | 100 | 1.4 | △ |
| 7-16 | 270 | 0.1 | 100 | 14.7 | 100 | 1.8 | △ |
| 7-17 | 290 | 0.1 | 100 | 14.7 | 100 | 1.5 | △ |
| 7-18 | 290 | 0.07 | 100 | 14.7 | 100 | 0.9 | × |
| 7-19 | 280 | 0.1 | 100 | 14.7 | 100 | 1.4 | △ |
| 7-20 | 350 | 1.0 | 100 | 14.7 | 100 | 0.5 | × |
| 7-21 | 270 | 0.1 | 100 | 14.7 | 100 | 1.4 | △ |
| 7-22 | 270 | 0.1 | 100 | 14.7 | 100 | 1.2 | △ |
| 7-23 | 270 | 0.1 | 100 | 14.7 | 100 | 1.3 | △ |
| 7-24 | - | - | 100 | 14.7 | 100 | 1.3 | △ |
| 7-25 | 280 | 0.15 | 100 | 14.7 | 100 | 2.5 | ○ |
| 7-26 | 280 | 0.15 | 100 | 14.7 | 100 | 2.6 | ○ |
| 7-27 | 280 | 0.15 | 100 | 14.7 | 100 | 2.9 | ⓞ |
| 7-28 | 280 | 0.15 | 100 | 14.7 | 100 | 2.7 | ⓞ |
| 7-29 | 280 | 0.15 | 100 | 14.7 | 100 | 2.7 | ⓞ |
| 7-30 | 320 | 0.1 | 100 | 14.7 | 100 | 2.4 | ○ |
| 7-31 | 320 | 0.1 | 100 | 14.7 | 100 | 2.3 | ○ |
| 7-32 | 320 | 0.1 | 100 | 14.7 | 100 | 2.4 | ○ |
| 7-33 | 280 | 0.1 | 100 | 14.7 | 100 | 3.0 | ⓞ |
| 7-34 | 280 | 0.1 | 100 | 14.7 | 100 | 3.2 | ⓞ |
| 7-35 | 280 | 0.1 | 100 | 14.7 | 100 | 3.2 | ⓞ |
| 7-36 | 280 | 0.1 | 100 | 14.7 | 100 | 3.1 | ⓞ |
| 7-37 | 270 | 0.1 | 100 | 14.7 | 100 | 2.3 | ○ |
| 7-38 | 270 | 0.1 | 100 | 14.7 | 100 | 1.0 | ○ |
| 7-39 | 270 | 0.1 | 100 | 14.7 | 100 | 1.9 | ○ |
| 7-40 | 270 | 0.1 | 100 | 14.7 | 100 | 2.0 | △ |
| 7-41 | 270 | 0.1 | 100 | 14.7 | 100 | 2.0 | △ |
| 7-42 | 270 | 0.1 | 100 | 14.7 | 100 | 0.2 | × |

### (Example 8)

A saw wire was obtained by allowing coated diamond abrasive grains with an average grain diameter of 25µm to be adhered to a steel wire having a diameter of 140µm (tensile strength: 3450MPa), using a Zn-based solder to which 2.0mass% of Al serving as a low-melting-point metal had been added, such coated diamond abrasive grains serving as coated abrasive grains and having been treated with a Ni plating of 3µm, such steel wire being a metal wire and coated with about 1.0µm of a Cu-Zn alloy (Cu70%) serving as a high-melting-point metal layer (lower layer). A manufacturing method of this saw wire is described hereunder.

Zn serving as a low-melting-point metal was heated as well as melted in a melting tank to obtain a molten metal bath. The aforementioned abrasive grains were then mixed into the molten metal bath thus obtained. The aforementioned steel wire was further immersed therein, followed by pulling up the same in a vertical direction and at a constant speed. Particularly, the steel wire was pulled up through a liquid level from which the wet low-melting point metal (Zn metal) and the diamond abrasive grains were caused to accompany to the steel wire. Subsequently, the low-melting-point metal (Zn metal) was cooled and solidified above the liquid level, thereby causing the abrasive grains to be trapped therein and allowing such abrasive grains to be adhered to the steel wire. An average thickness of the low-melting-point metal layer (Zn layer) was regulated to 15µm by adjusting a pulling up speed. The tensile strength of the steel wire to which the abrasive grains had been adhered decreased within 5%. A cross-section observation revealed that there was a diffused layer formed on an interface between the high-melting-point metal layer (lower layer) of Cu and the low-melting-point metal layer (Zn layer) made of the solidified molten metal bath.

A 4H polytype SiC single crystal having a diameter of about 25mm was cut using a single wire saw apparatus. A cutting speed concerning the saw wire obtained in this example was four times faster than that of a saw wire to which diamond abrasive grains were adhered using a resin, and the consumption concerning the saw wire obtained in this example was one fourth of that of the corresponding saw wire. The densities of the abrasive grains on the surfaces of both saw wires were substantially the same. The abrasive grains were found to have dropped off significantly when the thickness of the high-melting-point metal layer (lower layer) was 0.01µm as compared to the case in which the thickness thereof was 1.0µm. Further, the abrasive grains were found to have dropped off relatively significantly when the thickness of the high-melting-point metal layer (lower layer) was 0.05µm. Furthermore, the abrasive grains were found to have dropped off to a small extent when the thickness of the high-melting-point metal layer (lower layer) was 0.2µm. In each case, a wire feeding speed was constant at the time of cutting.

### (Example 9)

There were separately prepared a saw wire obtained by allowing the surface of the saw wire of the previous Example to be further treated with a Ni electrolytic plating of 0.1 1µm serving as a high-melting-point metal layer, and a saw wire obtained by allowing the surface of the saw wire of the previous Example to be further treated with a Ni-B electroless plating of 0.05µm also serving as a high-melting-point metal layer. The saw wires thus prepared were further heated to 200°C so as to allow the high-melting-point metal to diffuse into the low-melting-point metal layer (Zn layer). There were observed a diffused layer and an intermetallic compound layer of Ni and Al (alloy layer), on the corresponding interface.

Cutting performance evaluation was also conducted in this example. It was found that the cutting speeds of the saw wires of Example 9 had further increased by 20% as compared to that of the saw wire of Example 8 in which the surface of the corresponding saw wire was not treated with plating. Further, in Example 9, there were observed less abrasive grains that had dropped off from a surface of a used saw wire as compared to Example 8.

Here, although the Zn-based solder used in Example 8 was a solder to which Al of 2.0mass% had been added (Zn:Al = 98:2), same results as those of Example 8 and Example 9 was able to be achieved when using a Zn-based solder to which Al of 3.0mass% and Ag of 2.0mass% had been added (Zn:Al:Ag = 95:3:2).

### Description of symbols

1. saw wire
2. metal wire
3. low-melting-point metal layer
4. high-melting-point metal laeyr
5. abrasive grains

## Claims

1. A fixed-abrasive grain saw wire with abrasive grains adhered to a metal wire through an adhesion portion, wherein said adhesion portion includes:
a Zn-based or Sn-based low-melting-point metal; and
a high-melting-point metal with a melting point higher than that of said low-melting-point metal.

2. The saw wire according to claim 1, wherein said high-melting-point metal is contained in a high-melting-point metal layer formed on at least one of areas including peripheries of said abrasive grains, a surface of said saw wire and a surface of said metal wire.

3. The saw wire according to claim 1, wherein said abrasive grains are coated with a Ni coating layer, said low-melting-point metal is an Sn-based solder containing 0.5 to 5.0% by mass of Ag, and said high-melting-point metal is an intermetallic compound containing Sn.

4. The saw wire according to claim 3, wherein said Sn-based solder containing 0.5 to 5.0% by mass of Ag has a structure in which there are dispersed Ag₃Sn-based intermetallic compounds that are at least one of a plate type having a thickness of 1 to 2µm and a cord type having a diameter of 1 to 2µm.

5. The saw wire according to claim 3 or claim 4, wherein said Sn-based solder containing 0.5 to 5.0% by mass of Ag further contains 0.01 to 0.5% by mass of Fe and 0.01 to 0.5% by mass of Ni.

6. The saw wire according to claim 3, wherein said abrasive grains comprise a multi-layered coating layer having a lower layer of Ti or Cr and an upper layer of Ni.

7. The saw wire according to claim 3 or claim 6, wherein said intermetallic compound containing Sn exists at least around said abrasive grains.

8. The saw wire according to claim 2 or claim 6, wherein an intermetallic compound containing Sn and Ni exists as an intermetallic compound layer around said abrasive grains.

9. The saw wire according to claim 2 or claim 6, wherein an intermetallic compound containing Sn and Ni includes one or more than one of Ni₃SN₄, Ni₃Sn₂ and Sn_{(1-x-y)}NiₓCu_{y} (here, 0.1 ≤ x ≤0.7, 0.01 ≤ y ≤ 0.5)

10. The saw wire according to claim 1, wherein said low-melting-point metal is a solder containing Sn and Zn, and said high-melting-point metal is an intermetallic compound containing Sn or Zn.

11. The saw wire according to claim 10, wherein said solder has a Zn content of 1 to 35% by mass.

12. The saw wire according to claim 11, wherein said solder has a composition represented by Sn-Zn-X in which X includes one or more than one of Bi, Ni, Cu, Fe, Sb, Pb, In and Ag, and a content of X is 0.5 to 5% by mass.

13. The saw wire according to claim 10, wherein said abrasive grains are coated with a Ni or Cu coating layer.

14. The saw wire according to claim 10 or claim 13, wherein said abrasive grains comprise a multi-layered coating layer having a lower layer of Ti or Cr and an upper layer ofNi or Cu.

15. The saw wire according to claim 10 or claim 13, wherein said intermetallic compound containing Sn or Zn exists at least around said abrasive grains.

16. The saw wire according to claim 10 or claim 13, wherein said intermetallic compound containing Sn or Zn includes one or more than one of a Ni-Sn-based, a Ni-Zn-based, a Ni-Sn-Zn-based, a Cu-Sn-based, a Cu-Sn-Zn-based and a Cu-Zn-based intermetallic compounds.

17. The saw wire according to claim 1, wherein said adhesion portion includes
a high-melting-point metal layer composed of said high-melting-point metal with a melting point of 700°C or higher; and
a low-melting-point metal layer composed of said low-melting-point metal.

18. The saw wire according to claim 17, wherein said high-melting-point metal layer is formed on an outside of said low-melting-point metal layer.

19. The saw wire according to claim 17 and claim 18, wherein said high-melting-point metal composing said high-melting-point metal layer and said low-melting-point metal composing said low-melting-point metal layer are diffused with one another, thereby forming in said low-melting-point metal layer an alloy phase of said low-melting-point metal and said high-melting-point metal.

20. The saw wire according to claim 17 or claim 18, wherein said high-melting-point metal composing said high-melting-point metal layer is Ni or a Ni alloy, or Cu or a Cu alloy.

21. The saw wire according to claim 17, wherein said abrasive grains have a Ni coating layer.

22. The saw wire according to claim 17 or claim 18, wherein said low-melting-point metal layer is formed through hot-dip plating.

23. The saw wire according to claim 17 or claim 18, wherein said low-melting-point metal composing said low-melting-point metal layer is a Zn-Al alloy.

24. The saw wire according to any one of claim 1, claim 2, claim 3, claim 10 and claim 17, wherein said abrasive grains are diamond abrasive grains.

25. The saw wire according to any one of claim 1, claim 2, claim 3, claim 10 and claim 17, wherein said metal wire is a steel wire.

26. The saw wire according to claim 25, wherein the surface of said metal wire is coated with a plating layer of Zn, brass or Cu.

27. A manufacturing method of saw wire for manufacturing a fixed-abrasive grain saw wire with a plurality of abrasive grains adhered to a metal wire, comprising:
mixing said abrasive grains into a molten metal bath prepared by melting a low-melting-point metal:
dipping said metal wire into said molten metal bath, followed by continuously pulling up said metal wire in a substantially vertical direction, thereby allowing said abrasive grains to be adhered to said metal wire.

28. The manufacturing method of saw wire according to claim 27, wherein said metal wire is continuously pulled up while said molten metal bath is being stirred or oscillated.

29. The manufacturing method of saw wire according to claim 27 or claim 28, wherein said low-melting-point metal is Sn or an Sn alloy, or Zn or a Zn alloy.

30. The manufacturing method of saw wire according to claim 27, wherein said metal wire is coated with a high-melting-point metal layer.

31. The manufacturing method of saw wire according to claim 27, wherein after said abrasive grains are adhered through said low-melting-point metal, a high-melting-point metal layer is formed thereon.

32. The manufacturing method of saw wire according to claim 30 or claim 31, comprising forming a diffused layer of a low-melting-point metal composing a low-melting-point metal layer and a high-melting-point metal composing a high-melting-point metal layer by performing a heating treatment at a temperature of not lower than 200°C and not higher than 600°C after forming said high-melting-point metal layer.

33. The manufacturing method of saw wire according to claim 30, wherein a high-melting-point metal composing said high-melting-point metal layer is Ni or an Ni alloy, or Cu or a Cu alloy.

## Amended claims

### Amended claims under Art. 19.1 PCT

1. (Currently amended) A fixed-abrasive grain saw wire with abrasive grains adhered to a metal wire through an adhesion portion, wherein said adhesion portion includes:
a Zn-based or Sn-based low-melting-point metal; and
a high-melting-point metal with a melting point higher than that of said low-melting-point metal, wherein said low-melting-point metal contains at least precipitates of said high-melting-point metal.

2. (Original) The saw wire according to claim 1, wherein said high-melting-point metal is contained in a high-melting-point metal layer formed on at least one of areas including peripheries of said abrasive grains, a surface of said saw wire and a surface of said metal wire.

3. (Original) The saw wire according to claim 1, wherein said abrasive grains are coated with a Ni coating layer, said low-melting-point metal is an Sn-based solder containing 0.5 to 5.0% by mass of Ag, and said high-melting-point metal is an intermetallic compound containing Sn.

4. (Original) The saw wire according to claim 3, wherein said Sn-based solder containing 0.5 to 5.0% by mass of Ag has a structure in which there are dispersed Ag₃Sn-based intermetallic compounds that are at least one of a plate type having a thickness of 1 to 2µm and a cord type having a diameter of 1 to 2µm.

5. (Original) The saw wire according to claim 3 or claim 4, wherein said Sn-based solder containing 0.5 to 5.0% by mass of Ag further contains 0.01 to 0.5% by mass of Fe and 0.01 to 0.5% by mass of Ni.

6. (Original) The saw wire according to claim 3, wherein said abrasive grains comprise a multi-layered coating layer having a lower layer of Ti or Cr and an upper layer ofNi.

7. (Original) The saw wire according to claim 3 or claim 6, wherein said intermetallic compound containing Sn exists at least around said abrasive grains.

8. (Original) The saw wire according to claim 2 or claim 6, wherein an intermetallic compound containing Sn and Ni exists as an intermetallic compound layer around said abrasive grains.

9. (Original) The saw wire according to claim 2 or claim 6, wherein an intermetallic compound containing Sn and Ni includes one or more than one of Ni₃SN₄, Ni₃Sn₂ and Sn_{(1-x-y)}NiₓCu_{y} (here, 0.1 ≤ x ≤0.7, 0.01 ≤ y ≤ 0.5) .

10. (Original) The saw wire according to claim 1, wherein said low-melting-point metal is a solder containing Sn and Zn, and said high-melting-point metal is an intermetallic compound containing Sn or Zn.

11. (Original) The saw wire according to claim 10, wherein said solder has a Zn content of 1 to 35% by mass.

12. (Original) The saw wire according to claim 11, wherein said solder has a composition represented by Sn-Zn-X in which X includes one or more than one of Bi, Ni, Cu, Fe, Sb, Pb, In and Ag, and a content of X is 0.5 to 5% by mass.

13. (Original) The saw wire according to claim 10, wherein said abrasive grains are coated with a Ni or Cu coating layer.

14. (Original) The saw wire according to claim 10 or claim 13, wherein said abrasive grains comprise a multi-layered coating layer having a lower layer of Ti or Cr and an upper layer of Ni or Cu.

15. (Original) The saw wire according to claim 10 or claim 13, wherein said intermetallic compound containing Sn or Zn exists at least around said abrasive grains.

16. (Original) The saw wire according to claim 10 or claim 13, wherein said intermetallic compound containing Sn or Zn includes one or more than one of a Ni-Sn-based, a Ni-Zn-based, a Ni-Sn-Zn-based, a Cu-Sn-based, a Cu-Sn-Zn-based and a Cu-Zn-based intermetallic compounds.

17. (Original) The saw wire according to claim 1, wherein said adhesion portion includes
a high-melting-point metal layer composed of said high-melting-point metal with a melting point of 700°C or higher; and
a low-melting-point metal layer composed of said low-melting-point metal.

18. (Original) The saw wire according to claim 17, wherein said high-melting-point metal layer is formed on an outside of said low-melting-point metal layer.

19. (Original) The saw wire according to claim 17 and claim 18, wherein said high-melting-point metal composing said high-melting-point metal layer and said low-melting-point metal composing said low-melting-point metal layer are diffused with one another, thereby forming in said low-melting-point metal layer an alloy phase of said low-melting-point metal and said high-melting-point metal.

20. (Original) The saw wire according to claim 17 or claim 18, wherein said high-melting-point metal composing said high-melting-point metal layer is Ni or a Ni alloy, or Cu or a Cu alloy.

21. (Original) The saw wire according to claim 17, wherein said abrasive grains have a Ni coating layer.

22. (Original) The saw wire according to claim 17 or claim 18, wherein said low-melting-point metal layer is formed through hot-dip plating.

23. (Original) The saw wire according to claim 17 or claim 18, wherein said low-melting-point metal composing said low-melting-point metal layer is a Zn-Al alloy.

24. (Original) The saw wire according to any one of claim 1, claim 2, claim 3, claim 10 and claim 17, wherein said abrasive grains are diamond abrasive grains.

25. (Original) The saw wire according to any one of claim 1, claim 2, claim 3, claim 10 and claim 17, wherein said metal wire is a steel wire.

26. (Original) The saw wire according to claim 25, wherein the surface of said metal wire is coated with a plating layer of Zn, brass or Cu.

27. (Original) A manufacturing method of saw wire for manufacturing a fixed-abrasive grain saw wire with a plurality of abrasive grains adhered to a metal wire, comprising:
mixing said abrasive grains into a molten metal bath prepared by melting a low-melting-point metal:
dipping said metal wire into said molten metal bath, followed by continuously pulling up said metal wire in a substantially vertical direction, thereby allowing said abrasive grains to be adhered to said metal wire.

28. (Original) The manufacturing method of saw wire according to claim 27, wherein said metal wire is continuously pulled up while said molten metal bath is being stirred or oscillated.

29. (Original) The manufacturing method of saw wire according to claim 27 or claim 28, wherein said low-melting-point metal is Sn or an Sn alloy, or Zn or a Zn alloy.

30. (Original) The manufacturing method of saw wire according to claim 27, wherein said metal wire is coated with a high-melting-point metal layer.

31. (Original) The manufacturing method of saw wire according to claim 27, wherein after said abrasive grains are adhered through said low-melting-point metal, a high-melting-point metal layer is formed thereon.

32. (Original) The manufacturing method of saw wire according to claim 30 or claim 31, comprising forming a diffused layer of a low-melting-point metal composing a low-melting-point metal layer and a high-melting-point metal composing a high-melting-point metal layer by performing a heating treatment at a temperature of not lower than 200°C and not higher than 600°C after forming said high-melting-point metal layer.

33. (Original) The manufacturing method of saw wire according to claim 30, wherein a high-melting-point metal composing said high-melting-point metal layer is Ni or an Ni alloy, or Cu or a Cu alloy.

Statement under Art. 19.1 PCT
Claim 1 has been amended to replace the recitation of "said adhesion portion includes: a Zn-based or Sn-based low-melting-point metal; and a high-melting-point metal with a melting point higher than that of said low-melting-point metal" in original claim 1 with the recitation of "said adhesion portion includes: a Zn-based or Sn-based low-melting-point metal; and a high-melting-point metal with a melting point higher than that of said low-melting-point metal, wherein said low-melting-point metal contains at least precipitates of said high-melting-point metal."
